# EUROPEAN PATENT APPLICATION

(11) **EP 4 380 281 A1**
(43) Date of publication of application: **05.06.2024**
(21) Application number: 22855277.4
(22) Date of filing: 02.08.2022
(51) Int. Cl.: H04W 72/12

(54) **METHOD AND APPARATUS FOR INFORMATION TRANSMISSION**

(30) Priority: 10.08.2021 CN 202110914712; 14.10.2021 CN 202111196366
(71) Applicant: Huawei Technologies Co., Ltd., Shenzhen, Guangdong 518129 (CN)
(72) Inventor: ZHANG, Yanqing, Shenzhen, Guangdong 518129 (CN); LI, Xueru, Shenzhen, Guangdong 518129 (CN)
(74) Representative: Pfenning, Meinig & Partner mbB
(86) International application number: PCT/CN2022/109575
(87) International publication number: WO 2023/016294

(57) **Abstract**

This application provides an information transmission method and apparatus. The method includes: receiving first configuration information, where the first configuration information includes a first duration, a second duration, and a first cycle, the first duration is less than the first cycle, and the first duration starts at a start moment of the first cycle; and when a time unit corresponding to an end of the first duration is not later than a time unit corresponding to an end of the second duration, and acknowledgment information is a negative acknowledgment NACK, skipping monitoring, in a next time unit of the time unit corresponding to the end of the second duration, retransmission scheduling control information corresponding to the acknowledgment information. According to technical solutions of this application, power consumption overheads caused by sleep interruption of a receive end due to reception of retransmitted data can be reduced, and reliable data transmission can be ensured.

## Description

This application claims priorities to Chinese Patent Application No. 202110914712.4, filed with the China National Intellectual Property Administration on August 10, 2021 and entitled "RETRANSMISSION METHOD", and to Chinese Patent Application No. 202111196366.7, filed with the China National Intellectual Property Administration on October 14, 2021 and entitled "INFORMATION TRANSMISSION METHOD AND APPARATUS", both of which are incorporated herein by reference in their entireties.

### TECHNICAL FIELD

This application relates to the communication field, and more specifically, to an information transmission method and apparatus.

### BACKGROUND

A real-time broadband communication (real-time broadband communication, RTBC) scenario in a future communication system aims to support a large bandwidth and a low interaction delay, to increase a bandwidth by 10 times under a given delay and a specific reliability requirement and create immersive experience when people interact with a virtual world. An extended reality professional (extended reality professional, XR Pro) service with a requirement for an ultra-high bandwidth and an ultra-low delay poses a more severe challenge to a 5^{th} generation (the 5^{th} generation, 5G) mobile communication technology. XR mainly includes virtual-reality interaction technologies such as virtual reality (virtual reality, VR), augmented reality (augmented reality, AR), and mixed reality (mixed reality, MR). In a downlink transmission process, XR content of a server generates data content at a fixed frequency (for example, 60 Hz or 120 Hz), and the data content is transmitted by a base station side to a terminal device of the XR. In addition, due to a graphics generation requirement, a camera needs to be built in devices such as an AR device and an MR device to capture and continuously upload a current scene image at a specific frequency (for example, 60 Hz).

In current new radio (new radio, NR), two scheduling manners, namely, dynamic scheduling and semi-persistent scheduling, are provided for both uplink transmission and downlink transmission. In a dynamic scheduling scenario, an energy-saving technology is discontinuous reception (discontinuous reception, DRX). According to this technology, a receive end can periodically enter a sleep mode (sleep mode) at some time, and does not monitor a physical downlink control channel (physical downlink control channel, PDCCH) subframe, but wakes up (wake up) from the sleep mode to monitor a PDCCH when monitoring is required. In addition, according to the DRX technology, a corresponding timer is allocated for each hybrid automatic repeat request (hybrid automatic repeat request, HARQ) process to receive retransmitted data at a specific time. However, in this wake-up manner, the sleep mode of the receive end may be interrupted. Especially when retransmission of a transport block (transport block, TB) that exceeds an air interface transmission time requirement may not help current data transmission, this wake-up manner not only does not help user experience of the receive end, but also causes extra power consumption overheads. The semi-persistent scheduling has a characteristic of one configuration for use of a plurality of times. To be specific, after one time of parameter configuration, parameters in this time of configuration are used in subsequent transmissions. However, in a semi-persistent transmission scenario, because the receive end cannot learn of a specific slot in which retransmission occurs, the receive end can only monitor the PDCCH in a fixed time period. In this case, a data transmission delay is increased, and the sleep mode of the receive end may be interrupted, thereby increasing power consumption overheads of the receive end.

Therefore, an information transmission method is urgently needed, to reduce power consumption overheads caused by sleep interruption of the receive end due to reception of retransmitted data and ensure reliable data transmission.

### SUMMARY

This application provides an information transmission method and apparatus, to reduce power consumption overheads caused by sleep interruption of a receive end due to reception of retransmitted data and ensure reliable data transmission.

According to a first aspect, an information transmission method is provided, including: receiving first configuration information, where the first configuration information includes a first duration, a second duration, and a first cycle, the first duration is less than the first cycle, the first duration starts at a start moment of the first cycle, and the second duration indicates an estimated minimum duration from a first moment at which a first communication apparatus reports acknowledgment information to a time at which the first communication apparatus receives retransmission scheduling control information corresponding to the acknowledgment information, or the second duration indicates an estimated minimum duration from a second moment at which a first communication apparatus transmits uplink/sidelink data to a time at which the first communication apparatus receives retransmission scheduling control information corresponding to the uplink/sidelink data; and when a time unit corresponding to an end of the first duration is not later than a time unit corresponding to an end of the second duration, and the acknowledgment information is a negative acknowledgment NACK, skipping monitoring, in a next time unit of the time unit corresponding to the end of the second duration, the retransmission scheduling control information corresponding to the acknowledgment information.

According to technical solutions of this application, power consumption overheads caused by sleep interruption of a receive end due to reception of retransmitted data can be reduced, and reliable data transmission can be ensured.

With reference to the first aspect, in some implementations of the first aspect, the method further includes: monitoring, in K consecutive time units that are before a time unit corresponding to an end of the first cycle and that are adjacent to the time unit corresponding to the end of the first cycle, the retransmission scheduling control information corresponding to the acknowledgment information.

In this way, according to the technical solutions of this application, fast and reliable transmission of retransmitted data can be ensured, and power consumption overheads caused by sleep interruption of the receive end due to reception of the retransmitted data can be reduced.

With reference to the first aspect, in some implementations of the first aspect, when the time unit corresponding to the end of the first duration is not later than the time unit corresponding to the end of the second duration, and the acknowledgment information is the NACK, the method further includes: prolonging the second duration from an end location in the first cycle to a start moment of the K consecutive time units adjacent to the time unit corresponding to the end of the first cycle.

With reference to the first aspect, in some implementations of the first aspect, the first configuration information is further used to configure a third duration, and the third duration indicates a maximum duration from a next time unit of the time unit corresponding to the end of the second duration to the time at which the first communication apparatus receives the retransmission scheduling control information corresponding to the acknowledgment information; or the third duration indicates a maximum duration from a next time unit of the time unit corresponding to the end of the second duration to a time at which the first communication apparatus receives a scheduling grant of the uplink/sidelink data.

With reference to the first aspect, in some implementations of the first aspect, the K consecutive time units are determined based on a quantity of HARQ processes whose acknowledgment information is a NACK and for which the time unit corresponding to the end of the first duration is not later than a time unit corresponding to an end of each second duration; and/or determined based on a decoding capability of the first communication apparatus; and/or determined based on the third duration; and/or configured by using the first configuration information.

With reference to the first aspect, in some implementations of the first aspect, the first cycle is a discontinuous reception DRX long cycle; or the first cycle is a DRX short cycle; or the first cycle is a semi-persistent transmission cycle; or the first cycle is a transmission cycle of a service.

With reference to the first aspect, in some implementations of the first aspect, the acknowledgment information is acknowledgment information of a hybrid automatic repeat request HARQ process.

With reference to the first aspect, in some implementations of the first aspect, the first configuration information is further used to indicate a fourth duration, the fourth duration indicates a duration for which the first communication apparatus monitors control information, and the method further includes: determining a fifth duration, where the first communication apparatus monitors control information in the fifth duration, and a start location of the fifth duration in the first cycle is determined through shifting a start location of the fourth duration forward by the K consecutive time units.

With reference to the first aspect, in some implementations of the first aspect, a next time unit of a time unit corresponding to an end of the fifth duration in the first cycle is a time unit corresponding to a start of the fourth duration in a next adjacent first cycle; or a time unit corresponding to an end of the fifth duration in the first cycle is a time unit corresponding to an end of the fourth duration in a next adjacent first cycle.

With reference to the first aspect, in some implementations of the first aspect, the fifth duration is valid only in the first cycle.

According to a second aspect, an information transmission method is provided, including: sending first configuration information, where the first configuration information includes a first duration, a second duration, and a first cycle, the first duration is less than the first cycle, the first duration starts at a start moment of the first cycle, and the second duration indicates a minimum duration from a first moment at which a second communication apparatus receives acknowledgment information to a time at which the second communication apparatus sends retransmission scheduling control information corresponding to the acknowledgment information, or the second duration indicates a minimum duration from a second moment at which a second communication apparatus receives uplink/sidelink data to a time at which the second communication apparatus sends retransmission scheduling control information corresponding to the uplink/sidelink data; and when a time unit corresponding to an end of the first duration is not later than a time unit corresponding to an end of the second duration, and the acknowledgment information is a negative acknowledgment NACK, skipping sending, in a next time unit of the time unit corresponding to the end of the second duration, the retransmission scheduling control information corresponding to the acknowledgment information.

According to technical solutions of this application, power consumption overheads caused by sleep interruption of a receive end due to reception of retransmitted data can be reduced, and reliable data transmission can be ensured.

With reference to the second aspect, in some implementations of the second aspect, the method further includes: sending, in K consecutive time units that are before a time unit corresponding to an end of the first cycle and that are adjacent to the time unit corresponding to the end of the first cycle, the retransmission scheduling control information corresponding to the acknowledgment information.

In this way, according to the technical solutions of this application, fast and reliable transmission of retransmitted data can be ensured, and power consumption overheads caused by sleep interruption of the receive end due to reception of the retransmitted data can be reduced.

With reference to the second aspect, in some implementations of the second aspect, the first configuration information is further used to configure a third duration, and the third duration indicates a maximum duration from a next time unit of the time unit corresponding to the end of the second duration to the time at which the second communication apparatus sends the retransmission scheduling control information corresponding to the acknowledgment information; or the third duration indicates a maximum duration from a next time unit of the time unit corresponding to the end of the second duration to a time at which the second communication apparatus sends a scheduling grant of the uplink/sidelink data.

With reference to the second aspect, in some implementations of the second aspect, the K consecutive time units are determined based on a quantity of HARQ processes whose acknowledgment information is a NACK and for which the time unit corresponding to the end of the first duration is not later than a time unit corresponding to an end of each second duration; and/or determined based on a decoding capability of the first communication apparatus; and/or determined based on the third duration; and/or configured by using the first configuration information.

With reference to the second aspect, in some implementations of the second aspect, the first cycle is a discontinuous reception DRX long cycle; or the first cycle is a DRX short cycle; or the first cycle is a semi-persistent transmission cycle; or the first cycle is a transmission cycle of a service.

With reference to the second aspect, in some implementations of the second aspect, the acknowledgment information is acknowledgment information of a hybrid automatic repeat request HARQ process.

With reference to the second aspect, in some implementations of the second aspect, the first configuration information is further used to indicate a fourth duration, and the second communication apparatus sends scheduling control information of data in the fourth duration. The method further includes: determining a fifth duration, where the second communication apparatus sends the scheduling control information of the data in the fifth duration, and a start location of the fifth duration in the first cycle is determined by shifting a start location of the fourth duration forward by the K consecutive time units.

With reference to the second aspect, in some implementations of the second aspect, a next time unit of a time unit corresponding to an end of the fifth duration in the first cycle is a time unit corresponding to a start of the fourth duration in a next adjacent first cycle; or a time unit corresponding to an end of the fifth duration in the first cycle is a time unit corresponding to an end of the fourth duration in a next adjacent first cycle.

With reference to the second aspect, in some implementations of the second aspect, the fifth duration is valid only in the first cycle.

According to a third aspect, an information transmission method is provided, including: receiving first configuration information, where the first configuration information includes a first duration, a second duration, and a first cycle, the first duration is less than the first cycle, the first duration starts at a start moment of the first cycle, and the second duration indicates an estimated minimum duration from a first moment at which a first communication apparatus reports acknowledgment information to a time at which the first communication apparatus receives retransmission scheduling control information corresponding to the acknowledgment information, or the second duration indicates an estimated minimum duration from a second moment at which a first communication apparatus transmits uplink/sidelink data to a time at which the first communication apparatus receives retransmission scheduling control information corresponding to the uplink/sidelink data; the first configuration information further includes a third duration, and the third duration indicates a maximum duration from a next time unit of a time unit corresponding to an end of the second duration to the time at which the first communication apparatus receives the retransmission scheduling control information corresponding to the acknowledgment information, or the third duration indicates a maximum duration from a next time unit of a time unit corresponding to an end of the second duration to a time at which the first communication apparatus receives a scheduling grant of the uplink/sidelink data; and when the third duration does not end in a next time unit of a time unit corresponding to an end of the first duration, skipping monitoring, in a remaining time range of the third duration, the retransmission scheduling control information corresponding to the acknowledgment information.

According to technical solutions of this application, power consumption overheads caused by sleep interruption of a receive end due to reception of retransmitted data can be reduced, and reliable data transmission can be ensured.

With reference to the third aspect, in some implementations of the third aspect, the method further includes: monitoring, in K consecutive time units that are before a time unit corresponding to an end of the first cycle and that are adjacent to the time unit corresponding to the end of the first cycle, the retransmission scheduling control information corresponding to the acknowledgment information.

In this way, according to the technical solutions of this application, fast and reliable transmission of retransmitted data can be ensured, and power consumption overheads caused by sleep interruption of the receive end due to reception of the retransmitted data can be reduced.

With reference to the third aspect, in some implementations of the third aspect, the K consecutive time units are determined based on a quantity of HARQ processes for which the third duration does not end in the next time unit of the time unit corresponding to the end of the first duration; and/or determined based on a decoding capability of the first communication apparatus; and/or determined based on the third duration; and/or configured by using the first configuration information.

With reference to the third aspect, in some implementations of the third aspect, the first cycle is a discontinuous reception DRX long cycle; or the first cycle is a DRX short cycle; or the first cycle is a semi-persistent transmission cycle; or the first cycle is a transmission cycle of a service.

With reference to the third aspect, in some implementations of the third aspect, the acknowledgment information is acknowledgment information of a hybrid automatic repeat request HARQ process.

With reference to the third aspect, in some implementations of the third aspect, the first configuration information is further used to indicate a fourth duration, the fourth duration indicates a duration for which the first communication apparatus monitors control information, and the method further includes: determining a fifth duration, where the first communication apparatus monitors control information in the fifth duration, and a start location of the fifth duration in the first cycle is determined through shifting a start location of the fourth duration forward by the K consecutive time units.

With reference to the third aspect, in some implementations of the third aspect, a next time unit of a time unit corresponding to an end of the fifth duration in the first cycle is a time unit corresponding to a start of the fourth duration in a next adjacent first cycle; or a time unit corresponding to an end of the fifth duration in the first cycle is a time unit corresponding to an end of the fourth duration in a next adjacent first cycle.

With reference to the third aspect, in some implementations of the third aspect, the fifth duration is valid only in the first cycle.

According to a fourth aspect, an information transmission method is provided, including: sending first configuration information, where the first configuration information includes a first duration, a second duration, and a first cycle, the first duration is less than the first cycle, the first duration starts at a start moment of the first cycle, and the second duration indicates a minimum duration from a first moment at which a first communication apparatus receives acknowledgment information to a time at which the first communication apparatus sends retransmission scheduling control information corresponding to the acknowledgment information, or the second duration indicates a minimum duration from a second moment at which a second communication apparatus receives uplink/sidelink data to a time at which the second communication apparatus sends retransmission scheduling control information corresponding to the uplink/sidelink data; the first configuration information further includes a third duration, and the third duration indicates a maximum duration from a next time unit of a time unit corresponding to an end of the second duration to the time at which the second communication apparatus sends the retransmission scheduling control information corresponding to the acknowledgment information, or the third duration indicates a maximum duration from a next time unit of a time unit corresponding to an end of the second duration to a time at which the second communication apparatus sends a scheduling grant of the uplink/sidelink data; and when the third duration does not end in a next time unit of a time unit corresponding to an end of the first duration, skipping sending, in a remaining time range of the third duration, the retransmission scheduling control information corresponding to the acknowledgment information.

According to technical solutions of this application, power consumption overheads caused by sleep interruption of a receive end due to reception of retransmitted data can be reduced, and reliable data transmission can be ensured.

With reference to the fourth aspect, in some implementations of the fourth aspect, the method further includes: sending, in K consecutive time units that are before a time unit corresponding to an end of the first cycle and that are adjacent to the time unit corresponding to the end of the first cycle, the retransmission scheduling control information corresponding to the acknowledgment information.

In this way, according to the technical solutions of this application, fast and reliable transmission of retransmitted data can be ensured, and power consumption overheads caused by sleep interruption of the receive end due to reception of the retransmitted data can be reduced.

With reference to the fourth aspect, in some implementations of the fourth aspect, the K consecutive time units are determined based on a quantity of HARQ processes for which the third duration does not end in the next time unit of the time unit corresponding to the end of the first duration; and/or determined based on a decoding capability of the first communication apparatus; and/or determined based on the third duration; and/or configured by using the first configuration information.

With reference to the fourth aspect, in some implementations of the fourth aspect, the first cycle is a discontinuous reception DRX long cycle; or the first cycle is a DRX short cycle; or the first cycle is a semi-persistent transmission cycle.

With reference to the fourth aspect, in some implementations of the fourth aspect, the acknowledgment information is acknowledgment information of a hybrid automatic repeat request HARQ process.

With reference to the fourth aspect, in some implementations of the fourth aspect, the first configuration information is further used to indicate a fourth duration, and the second communication apparatus sends scheduling control information of data in the fourth duration. The method further includes: determining a fifth duration, where the second communication apparatus sends the scheduling control information of the data in the fifth duration, and a start location of the fifth duration in the first cycle is determined by shifting a start location of the fourth duration forward by the K consecutive time units.

With reference to the fourth aspect, in some implementations of the fourth aspect, a next time unit of a time unit corresponding to an end of the fifth duration in the first cycle is a time unit corresponding to a start of the fourth duration in a next adjacent first cycle; or a time unit corresponding to an end of the fifth duration in the first cycle is a time unit corresponding to an end of the fourth duration in a next adjacent first cycle.

With reference to the fourth aspect, in some implementations of the fourth aspect, the fifth duration is valid only in the first cycle.

According to a fifth aspect, an information transmission apparatus is provided, including: a transceiver unit, configured to receive first configuration information, where the first configuration information includes a first duration, a second duration, and a first cycle, the first duration is less than the first cycle, the first duration starts at a start moment of the first cycle, and the second duration indicates an estimated minimum duration from a first moment at which a first communication apparatus reports acknowledgment information to a time at which the first communication apparatus receives retransmission scheduling control information corresponding to the acknowledgment information, or the second duration indicates an estimated minimum duration from a second moment at which a first communication apparatus transmits uplink/sidelink data to a time at which the first communication apparatus receives retransmission scheduling control information corresponding to the uplink/sidelink data; and a processing unit, configured to: when a time unit corresponding to an end of the first duration is not later than a time unit corresponding to an end of the second duration, and the acknowledgment information is a negative acknowledgment NACK, skipping monitoring, in a next time unit of the time unit corresponding to the end of the second duration, the retransmission scheduling control information corresponding to the acknowledgment information.

With reference to the fifth aspect, in some implementations of the fifth aspect, the processing unit is further configured to monitor, in K consecutive time units that are before a time unit corresponding to an end of the first cycle and that are adjacent to the time unit corresponding to the end of the first cycle, the retransmission scheduling control information corresponding to the acknowledgment information.

With reference to the fifth aspect, in some implementations of the fifth aspect, when the time unit corresponding to the end of the first duration is not later than the time unit corresponding to the end of the second duration, and the acknowledgment information is the NACK, the processing unit is further configured to prolong the second duration from an end location in the first cycle to a start moment of the K consecutive time units before and adjacent to the time unit corresponding to the end of the first cycle.

With reference to the fifth aspect, in some implementations of the fifth aspect, the first configuration information is further used to configure a third duration, and the third duration indicates a maximum duration from a next time unit of the time unit corresponding to the end of the second duration to the time at which the first communication apparatus receives the retransmission scheduling control information corresponding to the acknowledgment information; or the third duration indicates a maximum duration from a next time unit of the time unit corresponding to the end of the second duration to a time at which the first communication apparatus receives a scheduling grant of the uplink/sidelink data.

With reference to the fifth aspect, in some implementations of the fifth aspect, the K consecutive time units are determined based on a quantity of HARQ processes whose acknowledgment information is a NACK and for which the time unit corresponding to the end of the first duration is not later than a time unit corresponding to an end of each second duration; and/or determined based on a decoding capability of the first communication apparatus; and/or determined based on the third duration; and/or configured by using the first configuration information.

With reference to the fifth aspect, in some implementations of the fifth aspect, the first cycle is a discontinuous reception DRX long cycle; or the first cycle is a DRX short cycle; or the first cycle is a semi-persistent transmission cycle; or the first cycle is a transmission cycle of a service.

With reference to the fifth aspect, in some implementations of the fifth aspect, the acknowledgment information is acknowledgment information of a hybrid automatic repeat request HARQ process.

With reference to the fifth aspect, in some implementations of the fifth aspect, the first configuration information is further used to indicate a fourth duration, the fourth duration indicates a duration for which the first communication apparatus monitors control information, and the processing unit is further configured to determine a fifth duration, where the first communication apparatus monitors control information in the fifth duration, and a start location of the fifth duration in the first cycle is determined through shifting a start location of the fourth duration forward by the K consecutive time units.

With reference to the fifth aspect, in some implementations of the fifth aspect, a next time unit of a time unit corresponding to an end of the fifth duration in the first cycle is a time unit corresponding to a start of the fourth duration in a next adjacent first cycle; or a time unit corresponding to an end of the fifth duration in the first cycle is a time unit corresponding to an end of the fourth duration in a next adjacent first cycle.

With reference to the fifth aspect, in some implementations of the fifth aspect, the fifth duration is valid only in the first cycle.

According to a sixth aspect, an information transmission apparatus is provided, including: a transceiver unit, configured to send first configuration information, where the first configuration information includes a first duration, a second duration, and a first cycle, the first duration is less than the first cycle, the first duration starts at a start moment of the first cycle, and the second duration indicates a minimum duration from a first moment at which a second communication apparatus receives acknowledgment information to a time at which the second communication apparatus sends retransmission scheduling control information corresponding to the acknowledgment information, or the second duration indicates a minimum duration from a second moment at which a second communication apparatus receives uplink/sidelink data to a time at which the second communication apparatus sends retransmission scheduling control information corresponding to the uplink/sidelink data. The transceiver unit is further configured to: when a time unit corresponding to an end of the first duration is not later than a time unit corresponding to an end of the second duration, and the acknowledgment information is a negative acknowledgment NACK, skip sending, in a next time unit of the time unit corresponding to the end of the second duration, the retransmission scheduling control information corresponding to the acknowledgment information.

With reference to the sixth aspect, in some implementations of the sixth aspect, the transceiver unit is further configured to send, in K consecutive time units that are before a time unit corresponding to an end of the first cycle and that are adjacent to the time unit corresponding to the end of the first cycle, the retransmission scheduling control information corresponding to the acknowledgment information.

With reference to the sixth aspect, in some implementations of the sixth aspect, the first configuration information is further used to configure a third duration, and the third duration indicates a maximum duration from a next time unit of the time unit corresponding to the end of the second duration to the time at which the second communication apparatus sends the retransmission scheduling control information corresponding to the acknowledgment information; or the third duration indicates a maximum duration from a next time unit of the time unit corresponding to the end of the second duration to a time at which the second communication apparatus sends a scheduling grant of the uplink/sidelink data.

With reference to the sixth aspect, in some implementations of the sixth aspect, the K consecutive time units are determined based on a quantity of HARQ processes whose acknowledgment information is a NACK and for which the time unit corresponding to the end of the first duration is not later than a time unit corresponding to an end of each second duration; and/or determined based on a decoding capability of a first communication apparatus; and/or determined based on the third duration; and/or configured by using the first configuration information.

With reference to the sixth aspect, in some implementations of the sixth aspect, the first cycle is a discontinuous reception DRX long cycle; or the first cycle is a DRX short cycle; or the first cycle is a semi-persistent transmission cycle; or the first cycle is a transmission cycle of a service.

With reference to the sixth aspect, in some implementations of the sixth aspect, the acknowledgment information is acknowledgment information of a hybrid automatic repeat request HARQ process.

With reference to the sixth aspect, in some implementations of the sixth aspect, the first configuration information is further used to indicate a fourth duration, and the second communication apparatus sends scheduling control information of data in the fourth duration. The transceiver unit is further configured to determine a fifth duration, where the second communication apparatus sends the scheduling control information of the data in the fifth duration, and a start location of the fifth duration in the first cycle is determined by shifting a start location of the fourth duration forward by the K consecutive time units.

With reference to the sixth aspect, in some implementations of the sixth aspect, a next time unit of a time unit corresponding to an end of the fifth duration in the first cycle is a time unit corresponding to a start of the fourth duration in a next adjacent first cycle; or a time unit corresponding to an end of the fifth duration in the first cycle is a time unit corresponding to an end of the fourth duration in a next adjacent first cycle.

With reference to the sixth aspect, in some implementations of the sixth aspect, the fifth duration is valid only in the first cycle.

According to a seventh aspect, an information transmission apparatus is provided, including: a transceiver unit, configured to receive first configuration information, where the first configuration information includes a first duration, a second duration, and a first cycle, the first duration is less than the first cycle, the first duration starts at a start moment of the first cycle, and the second duration indicates an estimated minimum duration from a first moment at which a first communication apparatus reports acknowledgment information to a time at which the first communication apparatus receives retransmission scheduling control information corresponding to the acknowledgment information, or the second duration indicates an estimated minimum duration from a second moment at which a first communication apparatus transmits uplink/sidelink data to a time at which the first communication apparatus receives retransmission scheduling control information corresponding to the uplink/sidelink data; the first configuration information further includes a third duration, and the third duration indicates a maximum duration from a next time unit of a time unit corresponding to an end of the second duration to the time at which the first communication apparatus receives the retransmission scheduling control information corresponding to the acknowledgment information, or the third duration indicates a maximum duration from a next time unit of a time unit corresponding to an end of the second duration to a time at which the first communication apparatus receives a scheduling grant of the uplink/sidelink data; and a processing unit, configured to: when the third duration does not end in a next time unit of a time unit corresponding to an end of the first duration, skip monitoring, in a remaining time range of the third duration, the retransmission scheduling control information corresponding to the acknowledgment information.

With reference to the seventh aspect, in some implementations of the seventh aspect, the processing unit is further configured to monitor, in K consecutive time units that are before a time unit corresponding to an end of the first cycle and that are adjacent to the time unit corresponding to the end of the first cycle, the retransmission scheduling control information corresponding to the acknowledgment information.

With reference to the seventh aspect, in some implementations of the seventh aspect, the K consecutive time units are determined based on a quantity of HARQ processes for which the third duration does not end in the next time unit of the time unit corresponding to the end of the first duration; and/or determined based on a decoding capability of the first communication apparatus; and/or determined based on the third duration; and/or configured by using the first configuration information.

With reference to the seventh aspect, in some implementations of the seventh aspect, the first cycle is a discontinuous reception DRX long cycle; or the first cycle is a DRX short cycle; or the first cycle is a semi-persistent transmission cycle; or the first cycle is a transmission cycle of a service.

With reference to the seventh aspect, in some implementations of the seventh aspect, the acknowledgment information is acknowledgment information of a hybrid automatic repeat request HARQ process.

With reference to the seventh aspect, in some implementations of the seventh aspect, the first configuration information is further used to indicate a fourth duration, the fourth duration indicates a duration for which the first communication apparatus monitors control information, and the processing unit is further configured to determine a fifth duration, where the first communication apparatus monitors control information in the fifth duration, and a start location of the fifth duration in the first cycle is determined through shifting a start location of the fourth duration forward by the K consecutive time units.

With reference to the seventh aspect, in some implementations of the seventh aspect, a next time unit of a time unit corresponding to an end of the fifth duration in the first cycle is a time unit corresponding to a start of the fourth duration in a next adjacent first cycle; or a time unit corresponding to an end of the fifth duration in the first cycle is a time unit corresponding to an end of the fourth duration in a next adjacent first cycle.

With reference to the seventh aspect, in some implementations of the seventh aspect, the fifth duration is valid only in the first cycle.

According to an eighth aspect, an information transmission apparatus is provided, including: a transceiver unit, configured to send first configuration information, where the first configuration information includes a first duration, a second duration, and a first cycle, the first duration is less than the first cycle, the first duration starts at a start moment of the first cycle, and the second duration indicates a minimum duration from a first moment at which a first communication apparatus receives acknowledgment information to a time at which the first communication apparatus sends retransmission scheduling control information corresponding to the acknowledgment information, or the second duration indicates a minimum duration from a second moment at which a second communication apparatus receives uplink/sidelink data to a time at which the second communication apparatus sends retransmission scheduling control information corresponding to the uplink/sidelink data; and the first configuration information further includes a third duration, and the third duration indicates a maximum duration from a next time unit of a time unit corresponding to an end of the second duration to the time at which the second communication apparatus sends the retransmission scheduling control information corresponding to the acknowledgment information, or the third duration indicates a maximum duration from a next time unit of a time unit corresponding to an end of the second duration to a time at which the second communication apparatus sends a scheduling grant of the uplink/sidelink data. The transceiver unit is further configured to: when the third duration does not end in a next time unit of a time unit corresponding to an end of the first duration, skip sending, in a remaining time range of the third duration, the retransmission scheduling control information corresponding to the acknowledgment information.

With reference to the eighth aspect, in some implementations of the eighth aspect, the transceiver unit is further configured to send, in K consecutive time units that are before a time unit corresponding to an end of the first cycle and that are adjacent to the time unit corresponding to the end of the first cycle, the retransmission scheduling control information corresponding to the acknowledgment information.

With reference to the eighth aspect, in some implementations of the eighth aspect, the K consecutive time units are determined based on a quantity of HARQ processes for which the third duration does not end in the next time unit of the time unit corresponding to the end of the first duration; and/or determined based on a decoding capability of the first communication apparatus; and/or determined based on the third duration; and/or configured by using the first configuration information.

With reference to the eighth aspect, in some implementations of the eighth aspect, the first cycle is a discontinuous reception DRX long cycle; or the first cycle is a DRX short cycle; or the first cycle is a semi-persistent transmission cycle; or the first cycle is a transmission cycle of a service.

With reference to the eighth aspect, in some implementations of the eighth aspect, the acknowledgment information is acknowledgment information of a hybrid automatic repeat request HARQ process.

With reference to the eighth aspect, in some implementations of the eighth aspect, the first configuration information is further used to indicate a fourth duration, and the second communication apparatus sends scheduling control information of data in the fourth duration. The transceiver unit is further configured to determine a fifth duration, where the second communication apparatus sends the scheduling control information of the data in the fifth duration, and a start location of the fifth duration in the first cycle is determined by shifting a start location of the fourth duration forward by the K consecutive time units.

With reference to the eighth aspect, in some implementations of the eighth aspect, a next time unit of a time unit corresponding to an end of the fifth duration in the first cycle is a time unit corresponding to a start of the fourth duration in a next adjacent first cycle; or a time unit corresponding to an end of the fifth duration in the first cycle is a time unit corresponding to an end of the fourth duration in a next adjacent first cycle.

With reference to the eighth aspect, in some implementations of the eighth aspect, the fifth duration is valid only in the first cycle.

According to a ninth aspect, a communication apparatus is provided. The communication apparatus includes a processor and an interface circuit. The interface circuit is configured to: receive a signal from another communication apparatus other than the communication apparatus and transmit the signal to the processor, or send a signal from the processor to another communication apparatus other than the communication apparatus. The processor is configured to implement the method according to any one of the possible implementations of the first aspect or the third aspect by using a logic circuit or through executing code instructions.

According to a tenth aspect, a communication apparatus is provided. The communication apparatus includes a processor and an interface circuit. The interface circuit is configured to: receive a signal from another communication apparatus other than the communication apparatus and transmit the signal to the processor, or send a signal from the processor to another communication apparatus other than the communication apparatus. The processor is configured to implement the method according to any one of the possible implementations of the second aspect or the fourth aspect by using a logic circuit or through executing code instructions.

According to an eleventh aspect, a computer-readable storage medium is provided. The computer-readable storage medium stores a computer program or instructions. When the computer program or the instructions are executed, the method according to any one of the possible implementations of the first aspect to the fourth aspect is implemented.

According to a twelfth aspect, a computer program product including instructions is provided. When the instructions are run, the method according to any one of the possible implementations of the first aspect to the fourth aspect is implemented.

According to a thirteenth aspect, a computer program is provided. The computer program includes code or instructions. When the code or the instructions are run, the method according to any one of the possible implementations of the first aspect to the fourth aspect is implemented.

According to a fourteenth aspect, a chip system is provided. The chip system includes a processor and further includes a memory, and is configured to implement the method according to any one of the possible implementations of the first aspect to the fourth aspect. The chip system includes a chip, or includes a chip and another discrete device.

According to a fifteenth aspect, a communication system is provided, including a first communication apparatus and a second communication apparatus.

The first communication apparatus is configured to implement the method according to each implementation of the first aspect or the third aspect, and the second communication apparatus is configured to implement the method according to each implementation of the second aspect or the fourth aspect.

In a possible design, the communication system further includes another device that interacts with the first communication apparatus or the second communication apparatus in the solutions provided in embodiments of this application.

### BRIEF DESCRIPTION OF DRAWINGS

FIG. 1 is a schematic diagram of a communication system 100 to which this application is applicable;
FIG. 2 shows an example of a video coding scheme for information transmission to which this application is applicable;
FIG. 3 is a schematic diagram of an example of a semi-persistent transmission method to which this application is applicable;
FIG. 4 is a schematic diagram of an example of discontinuous reception DRX to which this application is applicable;
FIG. 5 is a schematic diagram of another example of DRX to which this application is applicable;
FIG. 6 is a schematic diagram of a DRX long cycle and a DRX short cycle to which this application is applicable;
FIG. 7 is a schematic diagram of an example of information retransmission in an existing DXR mechanism;
FIG. 8 is a schematic diagram of another example of information retransmission in an existing semi-persistent transmission mechanism;
FIG. 9 is a schematic flowchart of an example of an information transmission method according to this application;
FIG. 10 is a schematic flowchart of another example of an information transmission method according to this application;
FIG. 11 is a schematic diagram of a specific example of an information transmission method according to this application;
FIG. 12 is a schematic diagram of another specific example of an information transmission method according to this application;
FIG. 13(a) and FIG. 13(b) are a schematic diagram of still another specific example of an information transmission method according to this application;
FIG. 14 is a schematic flowchart of another example of an information transmission method according to this application;
FIG. 15 is a schematic diagram of still another specific example of an information transmission method according to this application;
FIG. 16 is a schematic diagram of an example of activating a first duration by using control information according to this application;
FIG. 17 is a schematic diagram of a structure of an example of an information transmission device according to this application; and
FIG. 18 is a schematic block diagram of an example of an information transmission apparatus according to this application.

### DESCRIPTION OF EMBODIMENTS

The following describes technical solutions of this application with reference to the accompanying drawings.

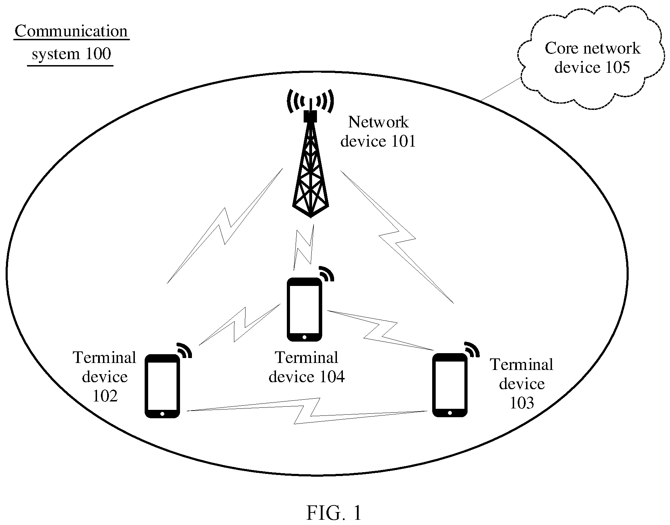

FIG. 1 is a schematic diagram of a communication system 100 to which an embodiment of this application is applicable.

As shown in FIG. 1, the communication system 100 may include one or more network devices, for example, a network device 101 shown in FIG. 1. The communication system 100 may further include one or more terminal devices (which may also be referred to as user equipment (user equipment, UE)), for example, a terminal device 102, a terminal device 103, and a terminal device 104 shown in FIG. 1. The communication system 100 may support a sidelink (sidelink) communication technology, for example, sidelink communication between the terminal device 102 and the terminal device 103, and sidelink communication between the terminal device 102 and the terminal device 104.

It should be understood that FIG. 1 is merely a schematic diagram. The communication system may further include another network device, for example, may further include a core network device 105, and a wireless relay device and a wireless backhaul device that are not shown in FIG. 1. A quantity of network devices and a quantity of terminal devices included in the mobile communication system are not limited in this embodiment of this application.

The terminal device in this embodiment of this application may also be referred to as user equipment, an access terminal, a subscriber unit, a subscriber station, a mobile station, a mobile console, a remote station, a remote terminal, a mobile device, a user terminal, a wireless communication device, a user agent, or a user apparatus. The terminal In this embodiment of this application may be a mobile phone (mobile phone), a tablet computer (pad), a computer with wireless sending and receiving functions, a virtual reality (virtual reality, VR) terminal, an augmented reality (augmented reality, AR) terminal, a wireless terminal in industrial control (industrial control), a wireless terminal in self-driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device, another processing device connected to a wireless modem, a vehicle-mounted device, a wearable device, a terminal in a 5G network, a terminal in a future evolved network, or the like.

The wearable device may also be referred to as a wearable intelligent device, and is a general term for wearable devices, such as glasses, gloves, watches, clothes, and shoes, that are developed through applying wearable technologies to intelligent designs of daily wear. The wearable device is a portable device that is directly worn on a body or integrated into clothes or an accessory of a user. The wearable device is not only a hardware device, but also implements a powerful function through software support, data exchange, and cloud interaction. Generalized wearable intelligent devices include full-featured and large-size devices that can implement all or some functions without depending on smartphones, such as smart watches or smart glasses, and devices that focus on only one type of application function and need to work with other devices such as smartphones, for example, various smart bands or smart jewelry for monitoring physical signs.

In addition, the terminal device may be alternatively a terminal device in an Internet of things (internet of things, IoT) system. A technical feature of the IoT is to connect an object to a network by using a communication technology, to implement an intelligent network of man-machine interconnection and things interconnection. A specific form of the terminal device is not limited in this application.

It should be understood that in this embodiment of this application, the terminal device may be an apparatus configured to implement functions of the terminal device, or may be an apparatus, for example, a chip system, that can support the terminal device in implementing functions. The apparatus may be installed in the terminal. In this embodiment of this application, the chip system may include a chip, or may include a chip and another discrete device.

In this embodiment of this application, the network device may be any device with wireless sending and receiving functions. The device includes but is not limited to an evolved NodeB (evolved NodeB, eNB), a home NodeB (for example, home evolved NodeB, or home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP) or a transmission and reception point (transmission and reception point, TRP), and the like. Alternatively, the device may be a next generation NodeB (next generation NodeB, gNB) or a transmission point (TRP or TP) in a 5^{th} generation (5^{th} generation, 5G) system, for example, a new radio (new radio, NR) system, or one antenna panel or a group of antenna panels (including a plurality of antenna panels) of a base station in a 5G system. Alternatively, the device may be a network node, for example, a baseband unit (BBU) or a distributed unit (distributed unit, DU), that constitutes a gNB or a transmission point.

In some deployments, the gNB may include a central unit (central unit, CU) and a DU. The CU implements some functions of the gNB, and the DU implements some functions of the gNB. For example, the CU is responsible for processing a non-real-time protocol and service, and implementing functions at radio resource control (radio resource control, RRC) and packet data convergence protocol (packet data convergence protocol, PDCP) layers. The DU is responsible for processing a physical layer protocol and real-time service, and implementing functions at radio link control (radio link control, RLC), media access control (media access control, MAC), and physical (physical, PHY) layers. The gNB may further include an active antenna unit (active antenna unit, AAU for short). The AAU implements some physical layer processing functions, and functions related to radio frequency processing and an active antenna. Because information of the RRC layer eventually becomes information of the PHY layer or be transformed from information of the PHY layer, under this architecture, higher layer signaling, such as RRC layer signaling, may also be considered to be sent by the DU, or sent by the DU and the AAU. It may be understood that the network device may be a device including one or more of a CU node, a DU node, and an AAU node. In addition, the CU may be classified into a network device in an access network (radio access network, RAN), or the CU may be classified into a network device in a core network (core network, CN). This is not limited in this application.

It should be understood that in this embodiment of this application, the network device may be an apparatus configured to implement functions of the network device, or may be an apparatus that can support the network device in implementing functions, for example, a chip system. The apparatus may be installed in the network device.

Technical solutions in embodiments of this application may be applied to various communication systems, for example, an LTE frequency division duplex (frequency division duplex, FDD) system, an LTE time division duplex (time division duplex, TDD) system, a 5G system, vehicle-to-X (vehicle-to-X, V2X) (the V2X may include vehicle to network (vehicle to network, V2N), vehicle to vehicle (vehicle to vehicle, V2V), vehicle to infrastructure (vehicle to infrastructure, V2I), a vehicle to pedestrian (vehicle to pedestrian, V2P), and the like), long term evolution-vehicle (long term evolution-vehicle, LTE-V), an Internet of vehicles, machine type communication (machine type communication, MTC), an Internet of things (Internet of things, IoT), long term evolution-machine (long term evolution-machine, LTE-M), machine to machine (machine to machine, M2M), device to device (device to device, D2D), or a future evolved communication system, for example, a 6^{th} generation (6^{th} generation, 6G) system.

A real-time broadband communication (real-time broadband communication, RTBC) scenario in a future communication system aims to support a large bandwidth and a low interaction delay, to increase a bandwidth by 10 times under a given delay and a specific reliability requirement and create immersive experience when people interact with a virtual world. An extended reality professional (extended reality professional, XR Pro) service with a requirement for an ultra-high bandwidth and an ultra-low delay poses a more severe challenge to a 5^{th} generation (the 5^{th} generation, 5G) mobile communication technology. XR mainly includes virtual-reality interaction technologies such as virtual reality (virtual reality, VR), augmented reality (augmented reality, AR), and mixed reality (mixed reality, MR). In a downlink transmission process, XR content of a server generates data content at a fixed frequency (for example, 60 Hz or 120 Hz), and the data content is transmitted by a base station side to a terminal device of the XR. In addition, due to a graphics generation requirement, a camera needs to be built in devices such as an AR device and an MR device to capture and continuously upload a current scene image at a specific frequency (for example, 60 Hz).

In current new radio (new radio, NR), two scheduling manners, namely, dynamic scheduling and semi-persistent scheduling are provided for both uplink transmission and downlink transmission. In a dynamic scheduling scenario, an energy-saving technology is discontinuous reception (discontinuous reception, DRX). According to this technology, a receive end can periodically enter a sleep mode (sleep mode) at some time, and does not monitor a physical downlink control channel (physical downlink control channel, PDCCH) subframe, but wakes up (wake up) from the sleep mode to monitor a PDCCH when monitoring is required. In addition, according to the DRX technology, a corresponding timer is allocated for each hybrid automatic repeat request (HARQ) process to receive retransmitted data at a specific time. However, in this wake-up manner, the sleep mode of the receive end may be interrupted. Especially when retransmission of a transport block (transport block, TB) that exceeds an air interface transmission time requirement may not help current data transmission, this wake-up manner not only does not help user experience of the receive end, but also causes extra power consumption overheads. The semi-persistent scheduling has a characteristic of one configuration for use of a plurality of times. To be specific, after one time of parameter configuration, parameters in this time of configuration are used in subsequent transmissions. However, in a semi-persistent transmission scenario, because the receive end cannot learn of a specific slot in which retransmission occurs, the receive end can only monitor the PDCCH in a fixed time period. In this case, a data transmission delay is increased, and the sleep mode of the receive end may be interrupted, thereby increasing power consumption overheads of the receive end.

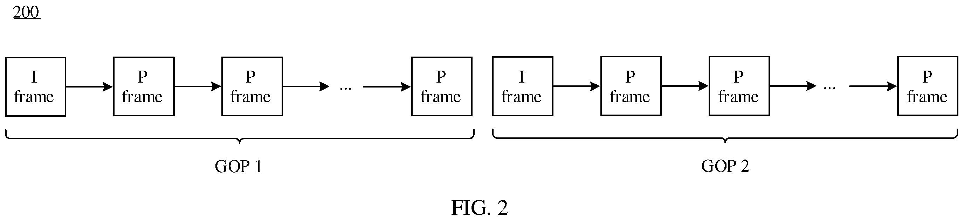

FIG. 2 shows a video coding scheme used for current XR service transmission. Each video sequence is divided into a plurality of groups of pictures (group of pictures, GOP) with a same size. Intra-frame or inter-frame coding is performed on a video frame in each group of pictures. Generally, a first encoded frame in each GOP is marked as an I frame, and can be independently encoded and decoded. A subsequent encoded frame is marked as a P frame, and needs to be encoded and decoded based on a previously encoded I frame or P frame, to improve coding compression performance. However, this coding manner also introduces error propagation. For example, if an error occurs in transmission of the I frame in FIG. 2, P frames following the I frame cannot be correctly decoded.

In NR, data scheduling may be usually classified into dynamic scheduling and semi-persistent scheduling. Semi-persistent scheduling includes configured grant scheduling and semi-persistent scheduling.

For example, uplink scheduling is classified into two types: dynamic scheduling transmission and configured grant (configured grant, CG) scheduling-free transmission. CG scheduling-free transmission is briefly referred to as CG transmission below. In dynamic scheduling transmission, before uplink data transmission, UE sends a transmission request to a base station and reports a volume of data to be transmitted. The base station allocates a corresponding transmission resource to the UE based on the information reported by the UE. For dynamic scheduling, different parameters may be configured for each transmission to adapt to a change of a channel status. However, dynamic scheduling requires a receive end to blindly detect control information, thereby increasing power consumption overheads of the receive end. Configured grant scheduling-free transmission indicates that the UE does not need to send a scheduling request to the base station in each transmission, and does not need to wait for an uplink scheduling grant from the base station. Instead, the UE autonomously sends uplink data periodically on a configured resource or an activated resource. Uplink scheduling-free transmission includes two types: a type 1 and a type 2. For the type 1, uplink scheduling-free transmission configuration is all completed by using RRC signaling. For the type 2, uplink scheduling-free transmission configuration is first configured by the base station by using RRC signaling, and then uplink transmission is activated by the base station by using downlink control information (downlink control information, DCI) signaling. Compared with dynamic scheduling transmission, in scheduling-free transmission, the receive end does not need to blindly detect control information. However, if a configuration parameter of CG transmission changes, and reactivation or reconfiguration needs to be performed, the receive end still needs to blindly detect control information, thereby causing power consumption overheads.

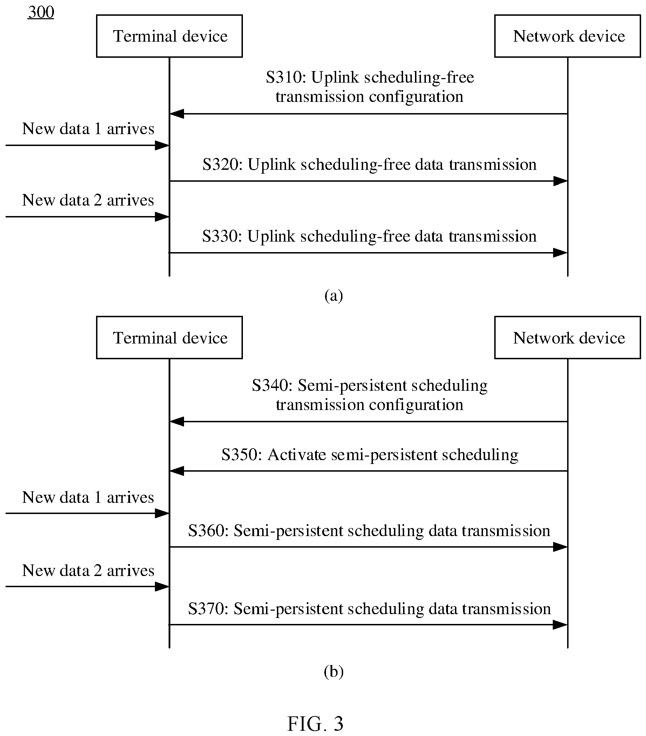

As shown in FIG. 3(a), an uplink scheduling-free transmission scheme is classified into two types: a type 1 and a type 2. Uplink scheduling-free transmission configuration in the type 1 is completed by using RRC signaling, and uplink scheduling-free transmission configuration in the type 2 is completed by jointly using RRC signaling and DCI activation signaling. For uplink scheduling-free data transmission in the type 1, a network device (for example, a base station) first configures a periodic transmission resource for a terminal device by using RRC signaling, and the terminal device may directly transmit uplink data on the configured resource when the terminal device needs to transmit the uplink data. Compared with scheduling-based data transmission, scheduling-free transmission saves a time for a scheduling request and data scheduling. All parameters related to scheduling-free transmission in the type 1 are configured through RRC.

For uplink scheduling-free data transmission in the type 2, a network device (for example, a base station) first performs configuration by using RRC signaling, and then the network device (for example, the base station) activates uplink transmission by using physical downlink control channel (physical downlink control channel, PDCCH) activation signaling that is scrambled by using a configured scheduling radio network temporary identifier (configured scheduling radio network temporary identifier, CS-RNTI). A scheduling-free transmission resource cycle in the type 2 is configured by using RRC signaling. Specific time-frequency resource configuration, a modulation and coding scheme (modulation and coding scheme, MCS) level, multiple-input multiple-output system (multi-input multi-output, MIMO) parameters, and the like are all indicated in activation DCI signaling. After receiving the DCI activation signaling, based on a cycle and an offset configured through RRC, the terminal device may directly perform transmission according to the configured transmission cycle.

In addition, in downlink transmission, NR also provides two scheduling manners: dynamic scheduling and preconfigured grant semi-persistent scheduling (semi-persistent scheduling, SPS) transmission. In dynamic scheduling, a terminal needs to monitor (monitor) a PDCCH, and determine scheduling signaling for the terminal based on CS-RNTI information carried by using the PDCCH. Power consumption of blind detection of UE is also relatively high. In preconfigured grant SPS transmission, a base station configures a downlink SPS resource cycle by using RRC signaling, but does not activate SPS in this case. As shown in FIG. 3(b), an SPS process is similar to a process of the type 2 of the uplink transmission. A base station sends a PDCCH scrambled by using a CS-RNTI to activate or deactivate SPS, and indicates a resource used for first SPS transmission. UE monitors the PDCCH to determine a resource location of subsequent SPS and whether downlink SPS is activated. After downlink SPS is activated, the UE receives downlink transmission at a preconfigured resource location.

Currently, for a downlink dynamic scheduling transmission scenario, an energy saving method is discontinuous reception (discontinuous reception, DRX). In this method, a receive-end device (for example, a terminal device) may periodically enter a sleep mode (sleep mode) at some time, and does not monitor a PDCCH subframe, but wakes up (wake up) from the sleep mode when monitoring is required, so that the terminal can achieve an objective of saving power. Although this increases a data transmission delay to some extent, power consumption of the terminal is reduced through performing this method if the delay does not affect user experience.

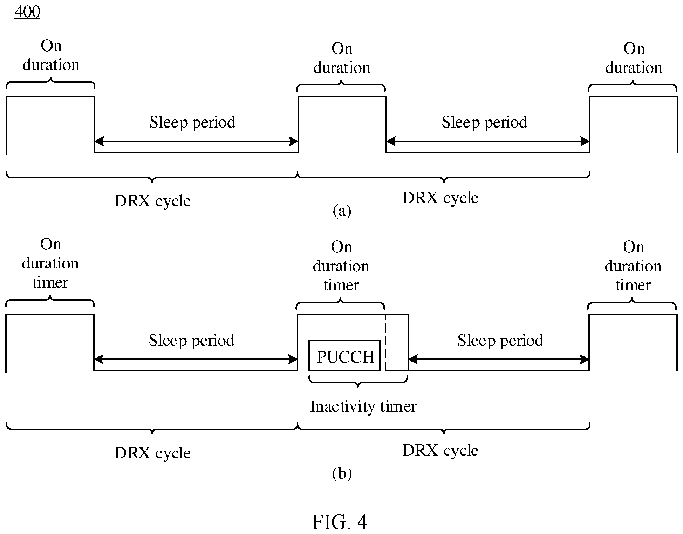

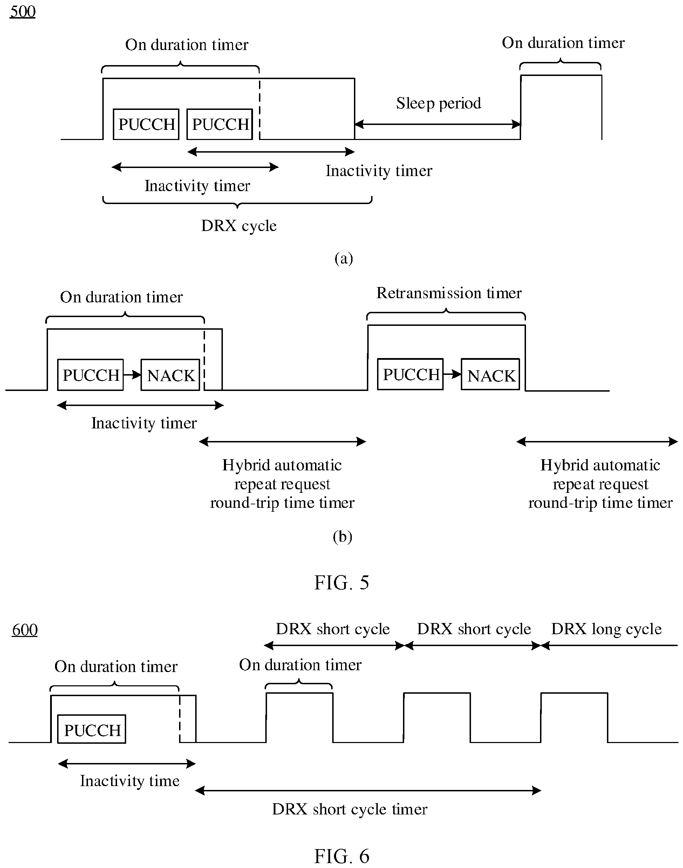

Because DRX is an important application scenario of the technical solutions of this application, to describe the technical solutions of this application more clearly, the following first briefly describes a DRX technology with reference to FIG. 4 and FIG. 5.

It should be understood that implementation of a DRX mechanism in an idle mode is different from that in a connected mode. In comparison, the DRX mechanism in the connected mode is much more complex. Therefore, DRX described below indicates DRX used by a terminal in a connected mode, that is, C-DRX (Connected DRX).

FIG. 4(a) is a schematic diagram of a typical DRX cycle. A period of time identified by an "on duration (On Duration)" is a time interval in which a terminal monitors a PDCCH. In this period of time, the terminal is in a wakeup mode, that is, in an "activation period". A period of time identified by a "sleep time (Opportunity for DRX)" is a sleep time in a DRX cycle. In other words, a time in which the terminal enters a sleep mode and does not monitor a PDCCH to save power belongs to a "dormant period". A longer sleep time in a DRX cycle indicates lower power consumption of the terminal. Correspondingly, a service transmission delay increases.

In the "activation period", the terminal continuously monitors a downlink PDCCH channel. The "activation period" includes not only an on duration (On Duration), but also an inactivity time (Inactivity Time) and a retransmission time (Retransmission Time). In other words, as shown in FIG. 4(b), the terminal is constantly in the "activation period" when the terminal is in an on duration timer OnDurationTimer period, an inactivity timer drx-InactivityTimer is running, or a retransmission timer drx-RetransmissionTimer is running. For example, in actual transmission, a number 0 subframe is a final subframe in an on duration (On Duration). In this case, a network side just needs to send data with a relatively large quantity of bytes to the terminal. The data cannot be completely sent in the number 0 subframe. If the DRX cycle shown in FIG. 4(a) is used, the terminal enters a DRX sleep mode in a number 1 subframe (that is, a first subframe after the number 0 subframe) and no longer monitors a PDCCH. The network side can only wait until the DRX cycle ends, and when a moment of a next on duration (On Duration) arrives, continue to send, to the terminal, data that is not fully transmitted. Therefore, as shown in FIG. 4(b), the inactivity timer drx-InactivityTimer is added to a DRX mechanism. If the inactivity timer drx-InactivityTimer is running, even if a time of the originally configured on duration (On Duration) ends, the terminal still needs to continue to monitor a PDCCH until the inactivity timer drx-InactivityTimer expires. In this way, an inactivity timer drx-InactivityTimer mechanism is added, and a data processing delay is reduced.

In most transmissions, after a terminal is scheduled in a subframe and receives or sends data, it is very likely that the terminal continues to be scheduled in next several subframes. Therefore, a mechanism principle of the inactivity timer drx-InactivityTimer is as follows: In an on duration (On Duration) in which the terminal enters a DRX activation period, when the terminal performs uplink or downlink data transmission scheduling, a base station starts or restarts the inactivity timer drx-InactivityTimer, and the terminal stays in the "activation period" until the timer expires, as shown in FIG. 5(a). If the inactivity timer drx-InactivityTimer is running, even if the originally configured on duration timer On Duration Timer ends, the terminal still needs to continue to monitor a PDCCH until the inactivity timer drx-InactivityTimer expires.

In addition, for a retransmission scenario, another timer related to downlink retransmission is further introduced into the DRX mechanism, that is, a hybrid automatic repeat request HARQ round-trip time (round-trip time, RTT) timer HARQ RTT timer. In the current DRX mechanism, if decoding of a transport block (transport block, TB) of a specific downlink HARQ process fails, the terminal may assume that retransmission occurs only after a time of the hybrid automatic repeat request round-trip time timer drx-HARQ-RTT-TimerDL after HARQ acknowledgment information is reported. Therefore, as shown in FIG. 5(b), when the hybrid automatic repeat request round-trip time timer drx-HARQ-RTT-TimerDL is running, the terminal may not monitor a PDCCH. When the hybrid automatic repeat request round-trip time timer drx-HARQ-RTT-TimerDL expires, and data received in a corresponding HARQ process is not successfully decoded, the terminal starts a retransmission timer drx-RetransmissionTimer for the HARQ process. The retransmission timer drx-RetransmissionTimer may indicate a longest time in which the terminal monitors a retransmission scheduling PDCCH. When the retransmission timer drx-RetransmissionTimer runs, the terminal continuously monitors the scheduling PDCCH for the corresponding HARQ process in the time of the timer until the scheduling PDCCH for the corresponding HARQ process is detected or the retransmission timer drx-RetransmissionTimer expires.

To adapt to different data transmission cycle requirements of the terminal, two scenarios: a short cycle and a long cycle are further introduced into the DRX mechanism. For example, when a voice over Internet protocol (voice over internet protocol, VoIP) service is performed, a voice codec usually sends a VoIP packet at intervals of 20 ms. Therefore, a DRX short cycle with a length of 20 ms may be configured. However, during a VoIP call, there is a relatively long silent period. A DRX long cycle may be configured. As shown in FIG. 6, the terminal uses the long cycle by default. If the inactivity timer drx-inactivity Timer is triggered, it is proved that there is data that needs to be transmitted, and there may be continuous data transmission subsequently. If a DRX short cycle is configured for the terminal, the terminal may enter the DRX short cycle, to reduce a transmission delay of a service. After entering the short cycle, the terminal starts a short cycle timer drx-ShortCycleTimer. After the short cycle timer drx-ShortCycleTimer expires, that is, after no PDCCH is detected in a plurality of consecutive DRX short cycles, the terminal enters the DRX long cycle, to save power for the terminal. In FIG. 6, the terminal triggers the inactivity timer drx-InactivityTimer after detecting the PDCCH in a start time of an on duration timer drx-onDurationTimer, and starts the DRX short cycle timer drx-shortCycleTimer after the inactivity timer drx-InactivityTimer expires. The short cycle timer drx-shortCycleTimer indicates a quantity of DRX short cycles drx-shortCycle, for example, two. If the PDCCH is detected in the DRX short cycle drx-shortCycle, the short cycle timer drx-shortCycleTimer is reset. After the short cycle timer drx-shortCycleTimer expires, the terminal enters the DRX long cycle drx-longCycle. It should be noted that, the start time of the DRX short cycle drx-shortCycle needs to satisfy: [(SFN×10)+subframe number] mod (drx-ShortCycle)=(drx-StartOffset) mod (drx-ShortCycle). Herein, an SFN (system frame number) is a system frame number; subframe number is a subframe number in the SFN; drx-ShortCycle and drx-StartOffset are configuration parameters in drx-config; and a DRX long cycle drx-LongCycle needs to satisfy: [(SFN×10)+subframe number] mod (drx-LongCycle)=drx-StartOffset.

In addition, when the terminal does not receive or send any data in a period of time (for example, 4 ms), the terminal may enter a sleep mode, to reduce power consumption.

Based on the foregoing descriptions, when a service such as an XR video is transmitted by using a dynamic scheduling method, to save power, an XR data transmission cycle may be in an on duration drx-onDuration through matching a DRX cycle with an XR cycle, to reduce a data transmission delay.

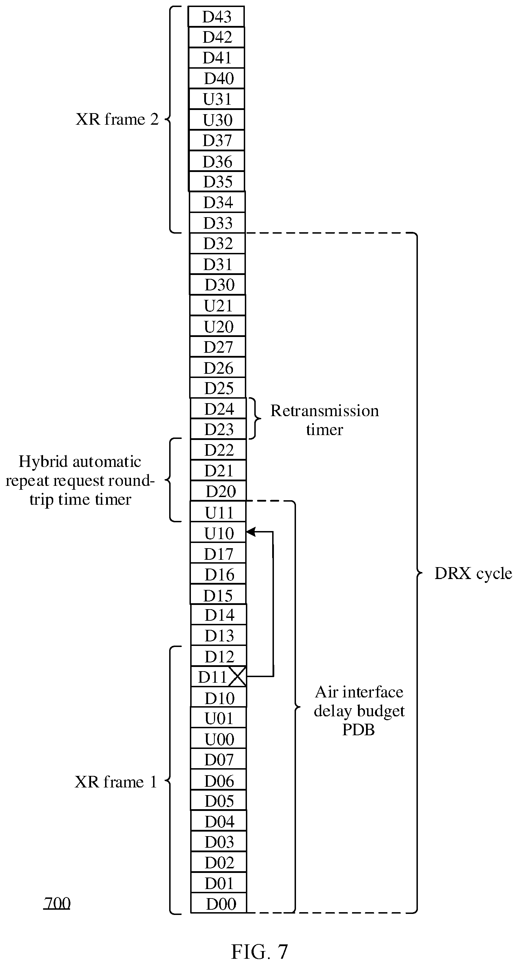

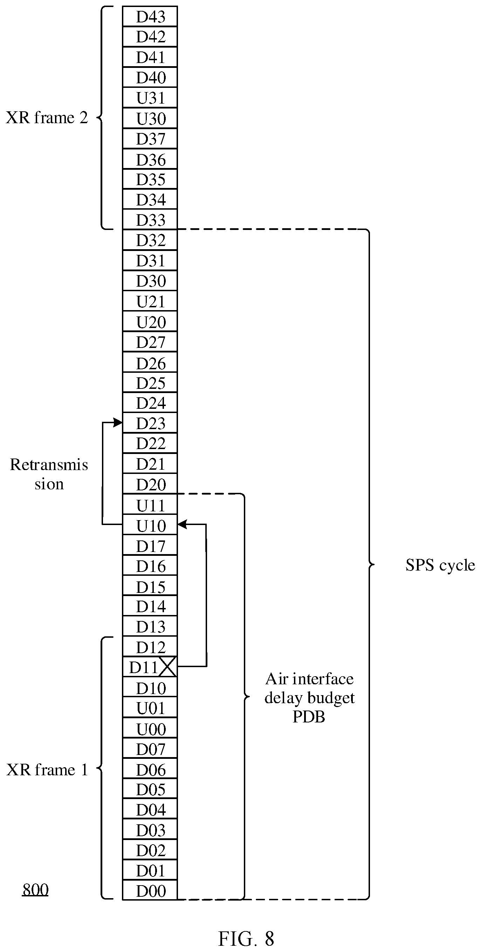

However, in the current DRX mechanism, the retransmission mechanism may not help improve user experience. Instead, the terminal is interrupted in entering the sleep mode, thereby increasing power consumption overheads. For example, a time corresponding to retransmission of data of a specific XR frame exceeds an air interface transmission time requirement. Therefore, there is not enough time for displaying the XR frame. As a result, the terminal may fail to enter the sleep mode. In addition, in consideration of inter-frame error propagation of XR frames in FIG. 2, data of the XR frame still helps decoding of a next XR frame. Therefore, to improve user experience, the data still needs to be transmitted. For example, FIG. 7 shows a downlink transmission scenario in which two adjacent XR frames: an XR frame 1 and an XR frame 2 are transmitted. A subcarrier spacing (subcarrier spacing, SCS) is 30 kHz (Hertz, Hz), and a time division duplex TDD uplink-downlink slot ratio is 8:2 (that is, every 10 slots are one cycle including eight downlink slots and two uplink slots). In FIG. 7, D represents a downlink slot, and U represents an uplink slot. D and U in FIG. 8, FIG. 10, FIG. 11, FIG. 12, FIG. 14, and FIG. 15 are the same as those in FIG. 7. Details are not described subsequently. In FIG. 7, data of the XR frame 1 is transmitted in 11 downlink slots starting from D00, and the XR frame 2 is transmitted in nine downlink slots starting from D33. A transmission interval of the XR frame 1 and the XR frame 2 is about 16.5 ms (60 Hz). A corresponding DRX cycle is also 16.5 ms. An air interface delay budget (packet delay budget, PDB) of the XR frame is 10 ms. An error occurs in TB transmission of the XR frame 1 at D11. After negative acknowledgment (Negative Acknowledgment, NACK) information of a HARQ process corresponding to the XR frame 1 is reported in an uplink slot U10, the terminal starts a hybrid automatic repeat request round-trip time timer drx-HARQ-RTT-TimerDL. After the timer expires, because data decoding at D11 fails, a downlink retransmission timer drx-retransmissionTimerDL is started. In a time in which the retransmission timer drx-retransmissionTimerDL is started, the terminal wakes up to monitor a PDCCH of retransmitted data. It should be noted that, in data transmission shown in FIG. 7, a time at which the terminal wakes up to receive the retransmitted data, for example, D23, exceeds the air interface delay budget PDB (10 ms) of the XR frame. Therefore, although all the XR frame 1 has been successfully received, there is not enough time for displaying the XR frame 1 on a user side because a transmission time exceeds the air interface delay budget PDB. In addition, because a transmission time of the XR frame 2 is about 5 ms from a retransmission time of the TB, the received XR frame 1 does not directly help decoding of the XR frame 2. On the contrary, because the terminal receives the retransmitted data between transmission of the XR frame 1 and transmission of the XR frame 2, the terminal cannot enter the sleep mode, thereby causing extra power consumption. In order that the terminal is not interrupted in entering the sleep mode, to ensure complete transmission of the XR frame 1, a possible method is to delay data retransmission exceeding the air interface delay budget PDB to a location before the XR frame 2. Although in the current mechanism, the base station may configure DRX parameters for the terminal by using DRX-config signaling in RRC signaling, for example, parameters such as drx-longCycle, drx-shortCycle, drx-HARQ-RTT-TimerDL, and drx-retransmissionTimerDL. These parameters are usually static parameters. Therefore, the foregoing method cannot be implemented through modifying a parameter value.

Currently, there is still a scenario in which data transmission is performed without DRX configuration. For example, semi-persistent scheduling (for example, semi-persistent scheduling (semi-persistent scheduling, SPS)) is used to transmit an XR service. Because SPS has a characteristic of configuring once and using for a plurality of times, in each SPS transmission process, the terminal does not need to decode corresponding control information (for example, DCI), thereby reducing power consumption overheads of the terminal.

FIG. 8 is a schematic diagram of transmitting two adjacent XR frames through SPS. Similarly, a case in which an SCS is 30 kHz and a TDD uplink-downlink slot ratio is 8:2 is used. It is assumed that an SPS cycle matches an XR frame cycle. A specific TB in the XR frame 1 is incorrectly transmitted. After HARQ acknowledgment information is transmitted in an uplink slot, a base station schedules retransmission by using DCI scrambled by using a configured scheduling-radio network temporary identifier (configured scheduling-radio network temporary identity, CS-RNTI).

However, in the foregoing data transmission in SPS scheduling, because the terminal does not determine a specific slot in which the retransmitted data occurs, the terminal can only continuously monitor a PDCCH in a segment of the cycle. Therefore, in this method, the terminal may continuously blindly detect control information, thereby increasing power consumption overheads. In addition, because a slot corresponding to the retransmitted data may exceed an air interface transmission time of the XR frame, SPS scheduling may also have a problem similar to that in the foregoing DRX mechanism. To be specific, the retransmitted TB does not help improve user experience, and may interrupt the terminal in entering a sleep mode and therefore cause extra power consumption overheads of the terminal.

Due to the foregoing reasons, this application provides an information transmission method and apparatus, to reduce power consumption overheads caused by sleep interruption of a receive end due to reception of retransmitted data and ensure reliable data transmission.

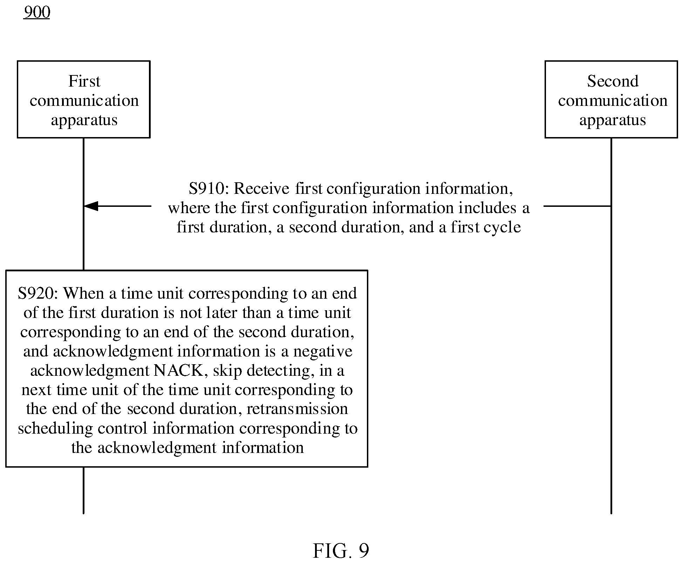

FIG. 9 is a schematic flowchart of an example of an information transmission method according to this application.

S910: A first communication apparatus receives first configuration information. The first configuration information includes a first duration, a second duration, and a first cycle.

The first duration is less than the first cycle. The first duration starts at a start moment of the first cycle. The second duration indicates an estimated minimum duration from a first moment at which a first communication apparatus reports acknowledgment information to a time at which the first communication apparatus receives retransmission scheduling control information corresponding to the acknowledgment information, or the second duration indicates an estimated minimum duration from a second moment at which the first communication apparatus transmits uplink/sidelink data to a time at which the first communication apparatus receives retransmission scheduling control information corresponding to the uplink/sidelink data.

Optionally, in this embodiment of this application, a duration may be determined by using a timer. For example, the first duration may be determined by using a first timer. This is not limited in this application.

Optionally, the first cycle is a discontinuous reception DRX long cycle; or the first cycle is a DRX short cycle; or the first cycle is a semi-persistent transmission cycle; or the first cycle is a transmission cycle of a service.

Optionally, the acknowledgment information is acknowledgment information of a hybrid automatic repeat request HARQ process.

Optionally, the first configuration information is further used to configure a third duration. The third duration indicates a maximum duration from a next time unit of a time unit corresponding to an end of the second duration to a time at which the first communication apparatus receives the retransmission scheduling control information corresponding to the acknowledgment information; or the third duration indicates a maximum duration from a next time unit of a time unit corresponding to an end of the second duration to a time at which the first communication apparatus receives a scheduling grant of the uplink/sidelink data.

S920: When a time unit corresponding to an end of the first duration is not later than the time unit corresponding to the end of the second duration, and the acknowledgment information is a negative acknowledgment NACK, the first communication apparatus does not monitor, in the next time unit of the time unit corresponding to the end of the second duration, retransmission scheduling control information corresponding to the acknowledgment information.

Optionally, the method further includes: The first communication apparatus monitors, in K consecutive time units that are before a time unit corresponding to an end of the first cycle and that are adjacent to the time unit corresponding to the end of the first cycle, the retransmission scheduling control information corresponding to the acknowledgment information.

In this way, according to the technical solutions of this application, fast and reliable transmission of retransmitted data can be ensured, and power consumption overheads caused by sleep interruption of a receive end due to reception of the retransmitted data can be reduced.

Optionally, when the time unit corresponding to the end of the first duration is not later than the time unit corresponding to the end of the second duration, and the acknowledgment information is the NACK, the method further includes: The first communication apparatus prolongs the second duration from an end location in the first cycle to a start moment of the K consecutive time units before and adjacent to the time unit corresponding to the end of the first cycle.

The K consecutive time units are determined based on a quantity of HARQ processes whose acknowledgment information is a NACK and for which the time unit corresponding to the end of the first duration is not later than a time unit corresponding to an end of each second duration; and/or determined based on a decoding capability of the first communication apparatus; and/or determined based on the third duration; and/or configured by using the first configuration information.

Optionally, the first configuration information is further used to indicate a fourth duration. The fourth duration indicates a duration for which the first communication apparatus monitors control information. The method further includes: determining a fifth duration. The first communication apparatus monitors control information in the fifth duration. A start location of the fifth duration in the first cycle is determined through shifting a start location of the fourth duration forward by the K consecutive time units.

Optionally, a next time unit of a time unit corresponding to an end of the fifth duration in the first cycle is a time unit corresponding to a start of the fourth duration in a next adjacent first cycle; or a time unit corresponding to an end of the fifth duration in the first cycle is a time unit corresponding to an end of the fourth duration in a next adjacent first cycle.

The fifth duration is valid only in the first cycle.

Optionally, the first configuration information further includes first indication information. The first indication information indicates an offset of a start moment of the first duration relative to a start moment of the first cycle.

It should be understood that "indicate" in this embodiment of this application may be explicitly and/or implicitly indicate. For example, "implicitly indicate" may be based on a location and/or a resource used for transmission; and "explicitly indicate" may be based on one or more parameters, and/or one or more indices, and/or one or more bit patterns that "explicitly indicate" represents. In addition, "indicate" may further mean "include". For example, the first indication information indicates the offset of the start moment of the first duration relative to the start moment of the first cycle. Alternatively, it may be expressed as that the first indication information includes the offset of the start moment of the first duration relative to the start moment of the first cycle.

According to the technical solutions of this application, power consumption overheads caused by sleep interruption of the receive end due to reception of the retransmitted data can be reduced, and reliable data transmission can be ensured.

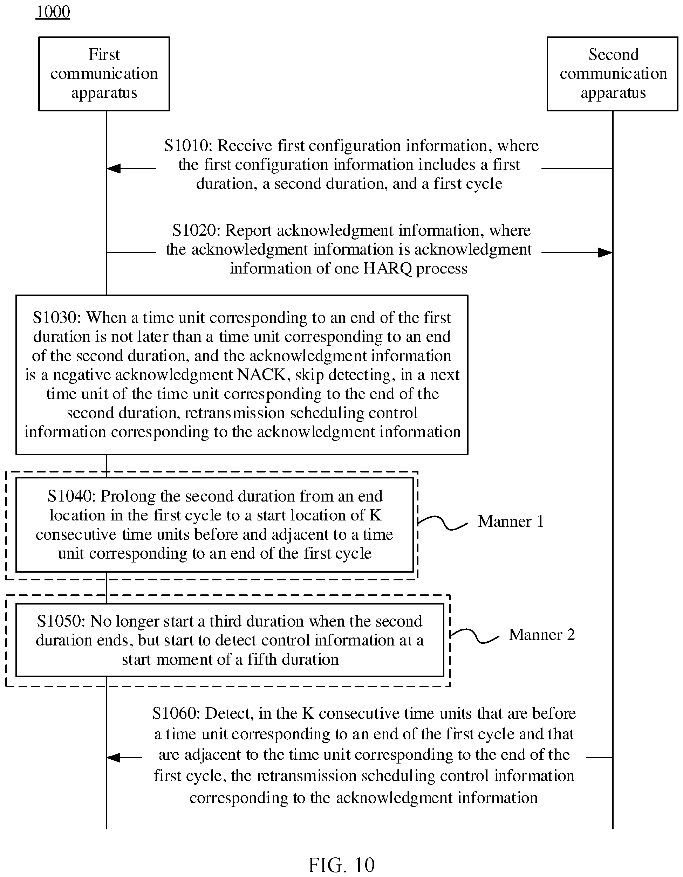

FIG. 10 is a schematic interaction diagram of another example of an information transmission method according to this application.

S1010: A first communication apparatus receives first configuration information. The first configuration information includes a first duration, a second duration, and a first cycle.

The first duration is less than the first cycle. The first duration starts at a start moment of the first cycle. The second duration indicates an estimated minimum duration from a first moment at which a first communication apparatus reports acknowledgment information to a time at which the first communication apparatus receives retransmission scheduling control information corresponding to the acknowledgment information, or the second duration indicates an estimated minimum duration from a second moment at which the first communication apparatus transmits uplink/sidelink data to a time at which the first communication apparatus receives retransmission scheduling control information corresponding to the uplink/sidelink data.

In this embodiment of this application, a duration may be determined by using a timer. For example, the first duration may be determined by using a first timer.

The first cycle is a discontinuous reception DRX long cycle; or the first cycle is a DRX short cycle; or the first cycle is a semi-persistent transmission cycle; or the first cycle is a transmission cycle of a service.

S1020: The first communication apparatus reports the acknowledgment information. The acknowledgment information is acknowledgment information of one HARQ process.

S1030: When a time unit corresponding to an end of the first duration is not later than a time unit corresponding to an end of the second duration, and the acknowledgment information is a negative acknowledgment NACK, the first communication apparatus skips monitoring, in a next time unit of the time unit corresponding to the end of the second duration, the retransmission scheduling control information corresponding to the acknowledgment information.

Different from the manners shown in FIG. 7 and FIG. 8 in which the first communication apparatus receives retransmitted data in the middle of transmission of an XR frame 0 and an XR frame 1 (that is, two consecutive XR frames). As a result, the first communication apparatus cannot enter a sleep mode, thereby causing extra power consumption. In this embodiment of this application, the first communication apparatus may delay retransmitted data of the XR frame 0 to several slots before transmission of the XR frame 1 for transmission. Specifically, the following two manners may be used.

### Manner 1:

S1040: The first communication apparatus prolongs the second duration from an end location in the first cycle to a start moment of K consecutive time units before and adjacent to a time unit corresponding to an end of the first cycle.

The K consecutive time units are determined based on a quantity of HARQ processes whose acknowledgment information is a NACK and for which the time unit corresponding to the end of the first duration is not later than a time unit corresponding to an end of each second duration; and/or determined based on a decoding capability of the first communication apparatus; and/or determined based on the third duration; and/or configured by using the first configuration information.

The first configuration information is further used to configure a third duration. The third duration indicates a maximum duration from a next time unit of the time unit corresponding to the end of the second duration to a time at which the first communication apparatus receives the retransmission scheduling control information corresponding to the acknowledgment information; or the third duration indicates a maximum duration from a next time unit of the time unit corresponding to the end of the second duration to a time at which the first communication apparatus receives a scheduling grant of the uplink/sidelink data.

The method further includes: determining a fifth duration. The first communication apparatus monitors control information in the fifth duration.

The fifth duration may be determined in a plurality of manners. This is not limited in this application. For example, the fifth duration is determined based on the K consecutive time units. To be specific, the fifth duration may be determined based on a quantity of HARQ processes whose HARQ acknowledgment information is a NACK and for which a slot corresponding to an end of each second duration is not earlier than a slot corresponding to the end of the first duration. For example, the slot corresponding to the end of the second duration is not earlier than the slot corresponding to the end of the first duration in four HARQ processes, but acknowledgment information of one of the four HARQ processes is a NACK. In this case, it may be considered that K is 1, that is, the fifth duration is one time unit. Alternatively, the fifth duration may be determined based on the third duration. For example, the fifth duration may be determined based on signaling (for example, drx-retransmissionTimerDL) that is in DRX configuration information and that is used to determine the third duration. Alternatively, the fifth duration may be independently configured by using the first configuration information drx-config. It should be noted that there may be more than one fifth duration in each DRX cycle. For example, when the fifth duration is determined based on the third duration, each HARQ process may have its own fifth duration. For another example, when the fifth duration is determined based on the quantity of HARQ processes whose HARQ acknowledgment information is a NACK and for which a slot corresponding to an end of each second duration is not earlier than the slot corresponding to the end of the first duration, each DRX cycle may include one fifth duration. For another example, when the fifth duration is independently configured by using the first configuration information, each DRX cycle may include one fifth duration, or each HARQ process may have its own fifth duration. This is not limited in this application.

### Manner 2:

S1050: The first communication apparatus no longer starts the third duration when the second duration ends, but starts to monitor control information at a start moment of the fifth duration.

The third duration indicates a maximum duration from a next time unit of the time unit corresponding to the end of the second duration to a time at which the first communication apparatus receives the retransmission scheduling control information corresponding to the acknowledgment information; or the third duration indicates a maximum duration from a next time unit of the time unit corresponding to the end of the second duration to a time at which the first communication apparatus receives a scheduling grant of the uplink/sidelink data.

The fifth duration is used by the first communication apparatus to monitor the control information. For a manner of determining the fifth duration, refer to the description in the foregoing manner 1. Details are not described herein again. A start location of the fifth duration in the first cycle is determined through shifting a start location of a fourth duration forward by K consecutive time units. The fifth duration is valid only in the first cycle. A next time unit of a time unit corresponding to an end of the fifth duration in the first cycle is a time unit corresponding to a start of the fourth duration in a next adjacent first cycle; or a time unit corresponding to an end of the fifth duration in the first cycle is a time unit corresponding to an end of the fourth duration in a next adjacent first cycle. It should be understood that a manner of determining the K consecutive time units is the same as that in step S1040. Details are not described herein again.

The fourth duration may be determined based on the first configuration information. The fourth duration indicates a duration in which the first communication apparatus monitors control information in the next adjacent first cycle.

S1060: The first communication apparatus monitors, in K consecutive time units that are before a time unit corresponding to an end of the first cycle and that are adjacent to the time unit corresponding to the end of the first cycle, the retransmission scheduling control information corresponding to the acknowledgment information.

Optionally, the fifth duration may be the K consecutive time units that are before the time unit corresponding to the end of the first cycle and that are adjacent to the time unit corresponding to the end of the first cycle. In this case, the fifth duration may include K=X+Y slots. Herein, X is a quantity of slots required for retransmitting data of a HARQ process whose acknowledgment information is a NACK in HARQ processes for which a slot corresponding to an end of each second duration exceeds the slot corresponding to the end of the first duration, and Y is a quantity of overlapping slots between uplink slots and X slots occupied for retransmitting the data before a next frame.

In this way, according to the technical solutions of this application, fast and reliable transmission of retransmitted data can be ensured, and power consumption overheads caused by sleep interruption of a receive end due to reception of the retransmitted data can be reduced.

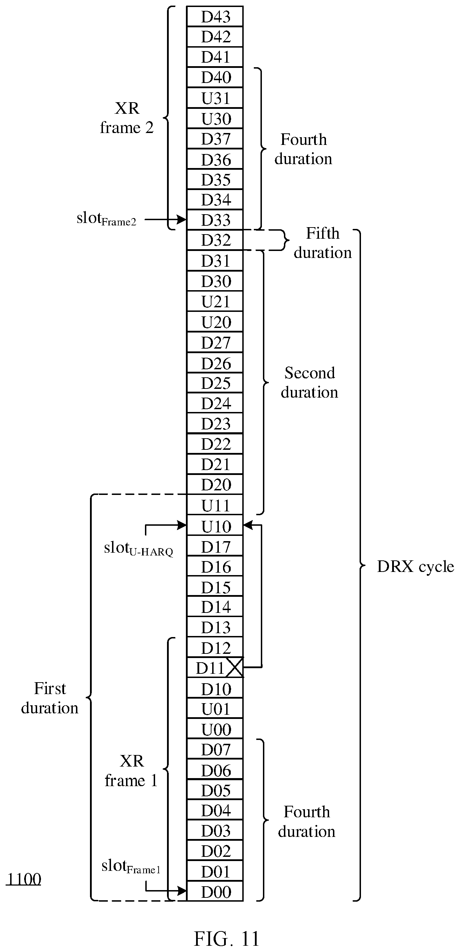

FIG. 11 is a schematic diagram of a specific example of an information transmission method according to this application.

The technical solutions in this embodiment of this application may be applied to XR transmission in DRX configuration. Through prolonging drx-HARQ-RTT-TimerDL, that is, by using the method in the manner 1 in FIG. 10, data retransmission is delayed to several slots before transmission of a next XR frame.

In the technical solutions of this application, a first timer delayBudgetTimer parameter may be added to DRX configuration DRX-config (that is, first configuration information). The first timer delayBudgetTimer may be used to determine a first duration. The first duration is used by a first communication apparatus (for example, a terminal device) to time an air interface delay budget PDB, that is, a service-expected transmission delay budget. The first duration (that is, the first timer delayBudgetTimer) is periodic. A periodicity of the first duration may be the same as or different from a DRX cycle. This is not limited in this application. In this embodiment, the periodicity of the first duration is the same as a first cycle, or the periodicity of the first duration is a first cycle. An XR service is used as an example. In this case, there is not enough time for displaying, to a user on a terminal side, XR frame data that exceeds the air interface delay budget PDB. That transmission cannot be completed within the first duration does not mean that reception of remaining XR frame data is useless. With reference to the features of inter-frame coding in FIG. 2, for example, successful decoding of an I frame also helps decoding of a P frame that is encoded and decoded with reference to the I frame. Because there is not enough time for displaying a remaining part that is of an XR frame and that exceed the first duration, receiving retransmitted data between two frames not only does not help decoding of XR frames, but also reduces probability that the first communication apparatus enters a sleep mode. Therefore, the retransmitted data is delayed, so that the first communication apparatus receives the retransmitted data before transmission of a next XR frame. This can ensure frame integrity, that is, help decoding of the next frame; and does not interrupt the first communication apparatus in entering the sleep mode.

As an example rather than a limitation, FIG. 11 shows an example of a transmission scenario of two consecutive XR frames (an XR frame 1 and an XR frame 2) when a subcarrier spacing SCS is 30 kHz and a time division duplex TDD uplink-downlink slot ratio is 8:2. Transmission of the XR frame 1 starts from D00, and includes 11 downlink slots. Transmission of the XR frame 2 starts from D33, and includes nine downlink slots. A transmission interval between the two XR frames is approximately 16.5 ms. ADRX cycle is also 16.5 ms. An XR frame cycle or the DRX cycle may be used to determine a first cycle.

Timing of an on duration timer drx-onDuraitonTimer starts from a start location of a DRX cycle, that is, from D00 and D33. The on duration timer drx-onDuraitonTimer is used to determine a fourth duration. It should be understood that the DRX cycle may be a DRX long cycle, or may be a DRX short cycle. This is not limited in this application. In addition, a delay budget timer drx-delayBudgetTimer is started from a start location of the DRX cycle, and the delay budget timer drx-delayBudgetTimer is used to determine the first duration. It should be noted that, in this embodiment, a start location of the first duration and a start location of the fourth duration (that is, an on duration timer drx-onDuraitonTimer) are the same, and are both the start location of the DRX cycle, that is, D00 and D33 in the figure. For example, the first duration (or may be referred to as drx-delayBudgetTimer) in the DRX configuration may be shown in the following bold font:

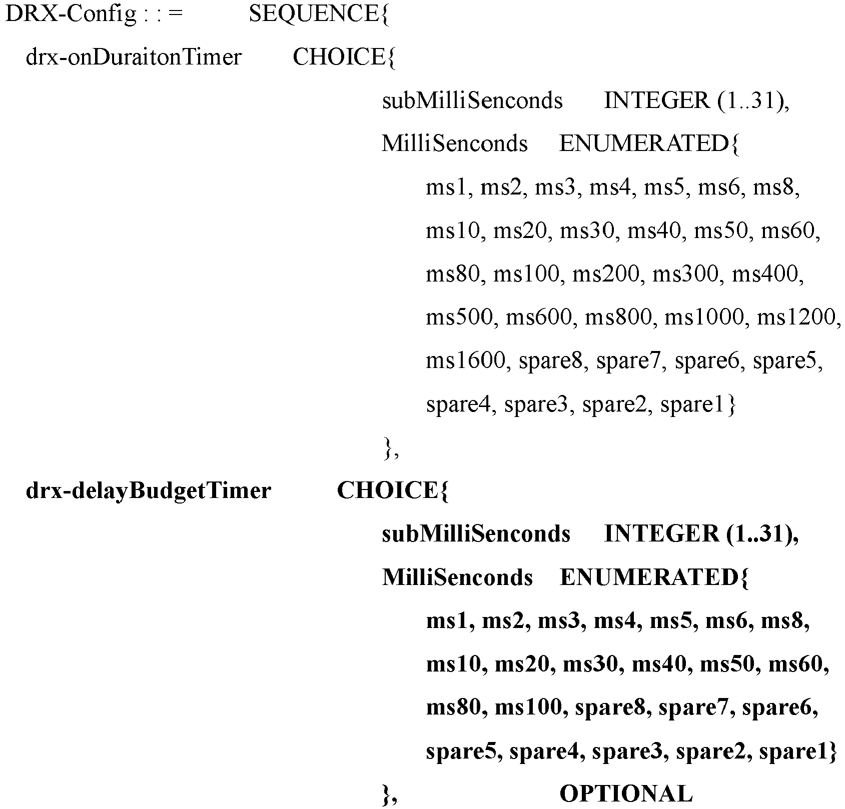

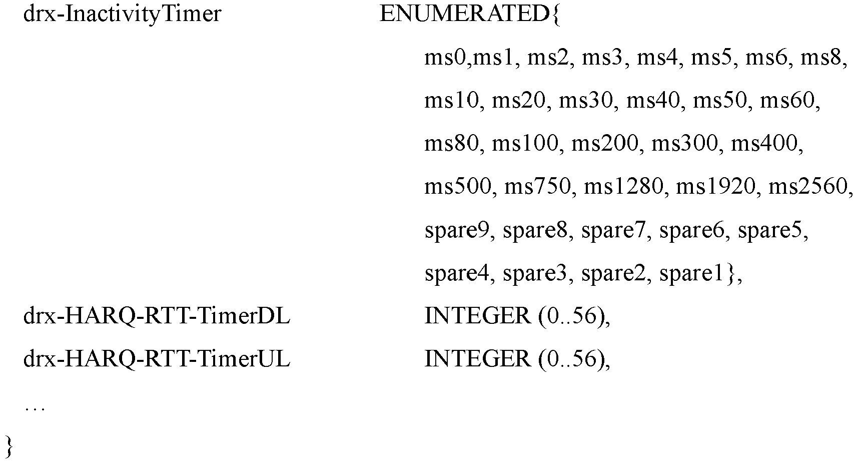

It should be understood that a configured value of the foregoing parameter may be a time unit such as a millisecond, a slot, or a symbol, or may be a quantity of times of monitoring control information. This is not limited in this application.

In FIG. 11, when data transmission of the XR frame 1 fails at D11, HARQ acknowledgment information is reported at U10 by the first communication apparatus (for example, the terminal) to a second communication apparatus (for example, a base station). After the HARQ acknowledgment information is reported, a second timer drx-HARQ-RTT-TimerDL is started for a corresponding HARQ process. The second timer may be used to determine a second duration. The second duration indicates an estimated minimum duration from a first moment at which the first communication apparatus reports the acknowledgment information to a time at which the first communication apparatus receives retransmission scheduling control information corresponding to the acknowledgment information, or an estimated minimum duration from a second moment at which the first communication apparatus transmits uplink/sidelink data to a time at which the first communication apparatus receives retransmission scheduling control information corresponding to the uplink/sidelink data. It should be noted that the first duration occurs only once in each DRX cycle and preferably has a same start location as the DRX cycle, and each HARQ process received in drx-onDuration has its own second duration.

In an existing solution, after reporting NACK information of D11 at U10, the first communication apparatus starts timing of the second duration (that is, starts the second timer Drx-HARQ-RTT-TimerDL), and the first communication apparatus may not monitor control information (for example, DCI) in the second duration. After the second duration ends (that is, the second timer Drx-HARQ-RTT-TimerDL expires), the first communication apparatus starts a third timer drx-retransmissionTimerDL. The third timer drx-retransmissionTimerDL may be configured to determine a third duration. The first communication apparatus may monitor control information in an on duration of the third duration. It is assumed that a slot corresponding to an end of the second duration of the HARQ process corresponding to the data at D11 is not earlier than a slot corresponding to an end of the first duration. In this case, user experience cannot be improved through monitoring the control information in the third duration. In addition, consequently, the first communication apparatus cannot enter a sleep mode or encounters sleep interruption. Therefore, in this embodiment, when the slot corresponding to the end of the second duration is not earlier than the slot corresponding to the end of the first duration, prolonging may be performed for retransmitted data of data corresponding to D11 in the XR frame 1 to K slots (K=1) before the XR frame 2, that is, D32, through increasing a time of the second duration (that is, prolonging a time of the second timer drx-HARQ-RTT-TimerDL).

A specific calculation method is as follows:
The second duration is updated to slot_{Frame2}-slot_{U-HARQ}-X-Y-1. Herein, slot_{Frame2} is a first slot of the XR frame 2, for example, D33 shown in FIG. 10, and optionally may be a start slot of a DRX on duration drx-onDuration; slot_{U-HARQ} is an uplink slot for reporting a HARQ, for example, U10 shown in FIG. 11; X is a quantity of slots required for retransmitting data of a HARQ process whose acknowledgment information is a NACK in HARQ processes in which the slot corresponding to the end of the second duration exceeds the slot corresponding to the end of the first duration, where only data at D11 needs to be retransmitted, and therefore X is 1 in FIG. 11; and Y is a quantity of overlapping slots between uplink slots and X slots occupied for retransmitting the data before the XR frame 2. Specifically, when a slot corresponding to the XR frame 2 (or a start slot of drx-onDuration or the start slot of the first duration) is advanced by X slots, there may be Y uplink slots in the X slots. In FIG. 11, there is no case in which a delayed downlink slot occupied for retransmitting the data overlaps an uplink slot. Therefore, Y is 0. In this embodiment, a value of K may be X+Y.

Therefore, the second duration shown in FIG. 11 may be updated to D33-U10-X-Y-1=34-19-1-0-1=13 slots. D33 is located in a 34^{th} slot from left to right in FIG. 11, and U10 is located in a 19^{th} slot from left to right in FIG. 11.

In another possible case, when a plurality of pieces of data need to be retransmitted, for example, if a slot in which a second duration corresponding to each of four HARQ processes ends is not earlier than the first duration, X may be set to 4. In this case, retransmission slots may be X=4 slots advanced from D33, that is, U21 to D32. Because U21 is an uplink slot and cannot be used for retransmission scheduling by the base station, the retransmission slot need to be further advanced by two slots, that is, to avoid the uplink slot. In this case, when Y is 2 and X is 4, the second communication apparatus (for example, the base station) schedules retransmission at D27 and D30 to D32. The first communication apparatus monitors, at slots: D27 and D30 to D32, control information (for example, DCI) for scheduling retransmission. In other words, in this case, K=X+Y=6.

Optionally, to reduce decoding impact of the XR frame 1 on the XR frame 2, a decoding delay at an application layer may be further considered when the second duration is updated. For example, when a decoding delay of an application layer of a receive end is Z, the second duration may be slot_{Frame2}-slot_{U-HARQ}-X-Y-Z-1. In addition, a transmission delay from a physical layer to the application layer may also be considered. For example, when the transmission delay from the physical layer to the application layer is W, and Z is greater than W, the second duration may be slot_{Frame2}-slot_{U-HARQ}-X-Y-(Z-W)-1. When Z is less than or equal to W, the second duration is still slot_{Frame2}-slot_{U-HARQ}-X-Y-1. In this case, a value of K should be X+Y+(Z-W). It should be understood that meanings of X and Y are the same as those described above. Details are not described again. For ease of understanding, in embodiments of this application, a slot is usually used as a time unit for presentation. It should be understood that the time unit in the foregoing embodiments may be any time unit, for example, a millisecond, a slot, or a symbol, and time units of durations may be different.

Herein, K may be used to determine a fifth duration. The fifth duration may be determined in a plurality of manners. This is not limited in this application. For example, the fifth duration may be determined based on a quantity of HARQ processes whose HARQ acknowledgment information is a NACK and for which a slot corresponding to an end of each second duration is not earlier than a slot corresponding to an end of a first duration. For example, the slot corresponding to the end of the second duration is not earlier than the slot corresponding to the end of the first duration in four HARQ processes, but acknowledgment information of one of the four HARQ processes is a NACK. In this case, it may be considered that K is 1. Alternatively, the fifth duration may be determined based on the third duration. For example, the fifth duration may be determined based on signaling (for example, drx-retransmissionTimerDL) that is in DRX configuration information and that is used to determine the third duration. Alternatively, the fifth duration may be independently configured by using the first configuration information drx-config. It should be noted that there may be more than one fifth duration in each DRX cycle. For example, when the fifth duration is determined based on the third duration, each HARQ process may have its own fifth duration. For another example, when the fifth duration is determined based on a quantity of HARQ processes whose HARQ acknowledgment information is a NACK and for which a slot corresponding to an end of each second duration is not earlier than the slot corresponding to the end of the first duration, each DRX cycle may include one fifth duration. For another example, when the fifth duration is independently configured by using the first configuration information, each DRX cycle may include one fifth duration, or each HARQ process may have its own fifth duration. This is not limited in this application.

It should be noted that timing of the second duration starts from a first symbol after HARQ transmission at the UL slot is completed, and each HARQ process has its own second duration. Therefore, more than one second duration may need to be prolonged. For example, in FIG. 11, if NACK acknowledgment information of two HARQ processes is respectively reported at U10 and U11, start locations and end locations of second durations corresponding to the two HARQ processes are also different. In this case, it may be specified that a second duration with a minimum increment in a plurality of second durations is valid, and another second duration is invalid. For example, for the data of the XR frame 1 in FIG. 11, the second duration started at U11 is the shortest, and therefore the second duration started at U11 is used. Alternatively, it may be specified that latest second duration is valid. For example, a calculated second duration at U10 may be different from a calculated second duration at U11, and the second duration at U11 may be used as a final duration (or timer). Therefore, coexistence of the plurality second durations does not affect the technical solutions of this application. It should be understood that there is only one NACK when a NACK is reported at U10, and there are two NACKs when a NACK is reported at U11. In consideration of this, a calculated prolonged amount of a HARQ process whose acknowledgment information is reported at U11 according to the foregoing embodiment should be less than a prolonged amount of a HARQ process whose HARQ acknowledgment information is reported at U10. Therefore, the first communication apparatus may start only a second timer of the HARQ process in which reporting is performed at U11.

In another implementation, the first configuration information may be used to configure a sixth duration for the first communication apparatus. The sixth duration indicates a prolonged amount of the second duration. FIG. 11 is still used as an example. When the slot corresponding to the end of the second duration (that is, the second timer drx-HARQ-RTT-TimerDL) is not later than the slot corresponding to the end of the first duration, a sixth timer drx-HARQ-RTT-ExtTimerDL is started. The sixth timer drx-HARQ-RTT-ExtTimerDL may be used to determine the sixth duration. In this case, the sixth duration may be considered as the prolonged amount of the second duration. The first communication apparatus may not monitor control information in the sixth duration.

For example, the sixth duration may be referred to as drx-HARQ-RTT-ExtTimerDL in the DRX configuration, and is shown in the following bold front:

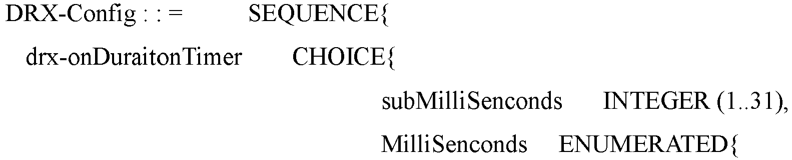

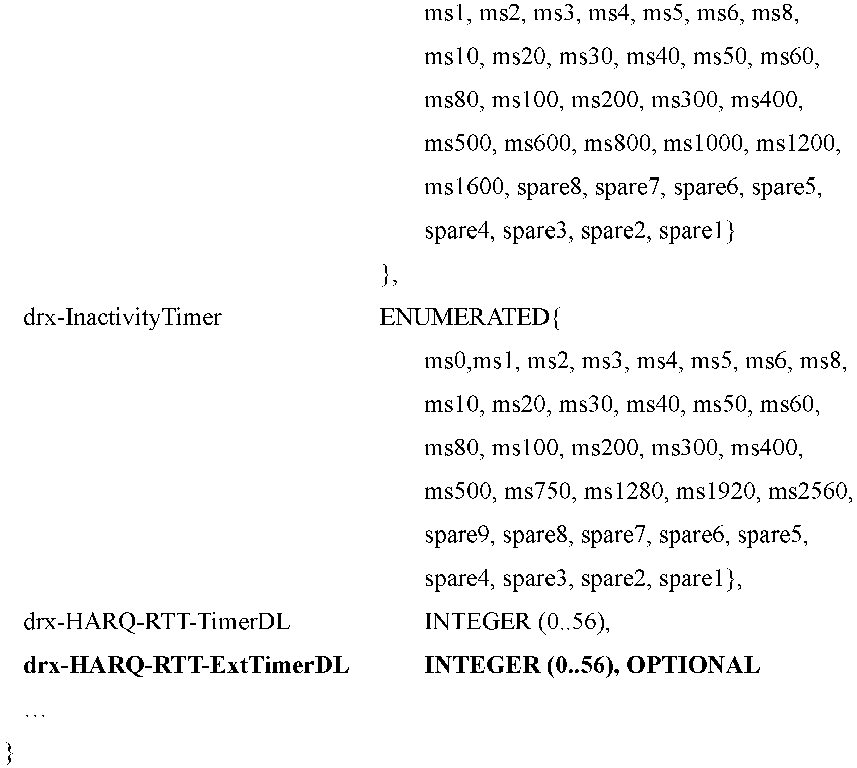

It should be understood that the configuration value of the foregoing parameter may be a time unit such as a millisecond, a slot, or a symbol. This is not limited in this application.

In still another implementation, the first configuration information may be used to configure a seventh timer for the first communication apparatus. The seventh time is used to determine a seventh duration. When the first/second communication apparatus estimates that the slot corresponding to the end of the second duration is not later than the slot corresponding to the end of the first duration, the seventh duration replaces the second duration. Downlink transmission is used as an example. When the first/second communication apparatus estimates that a slot corresponding to an end of second duration (that is, the second timer drx-HARQ-RTT-TimerDL) of a specific HARQ process is not later than a slot corresponding to an end of a first duration, after acknowledgment information is reported in the corresponding HARQ process, the second timer is not started, but the seventh timer drx-HARQ-RTT-TimerDL-r18 is started. The seventh timer drx-HARQ-RTT-TimerDL-r18 may be used to determine the seventh duration. In this case, the seventh duration may replace the second duration. The first communication apparatus may not monitor control information in the seventh duration. If the acknowledgment information of the HARQ process is the NACK, timing of the fifth duration starts from a next symbol of a symbol corresponding to an end of the seventh duration, and the first communication apparatus monitors transmission control information of the corresponding HARQ process in the fifth duration. It should be understood that the fifth duration may be the third duration. In other words, the fifth duration may be determined by using the third timer. Alternatively, the fifth duration may be determined based on the third duration. This is not limited in this application. For example, the seventh duration may be referred to as drx-HARQ-RTT-TimerDL-r18 in the DRX configuration, and is shown in the following bold front:

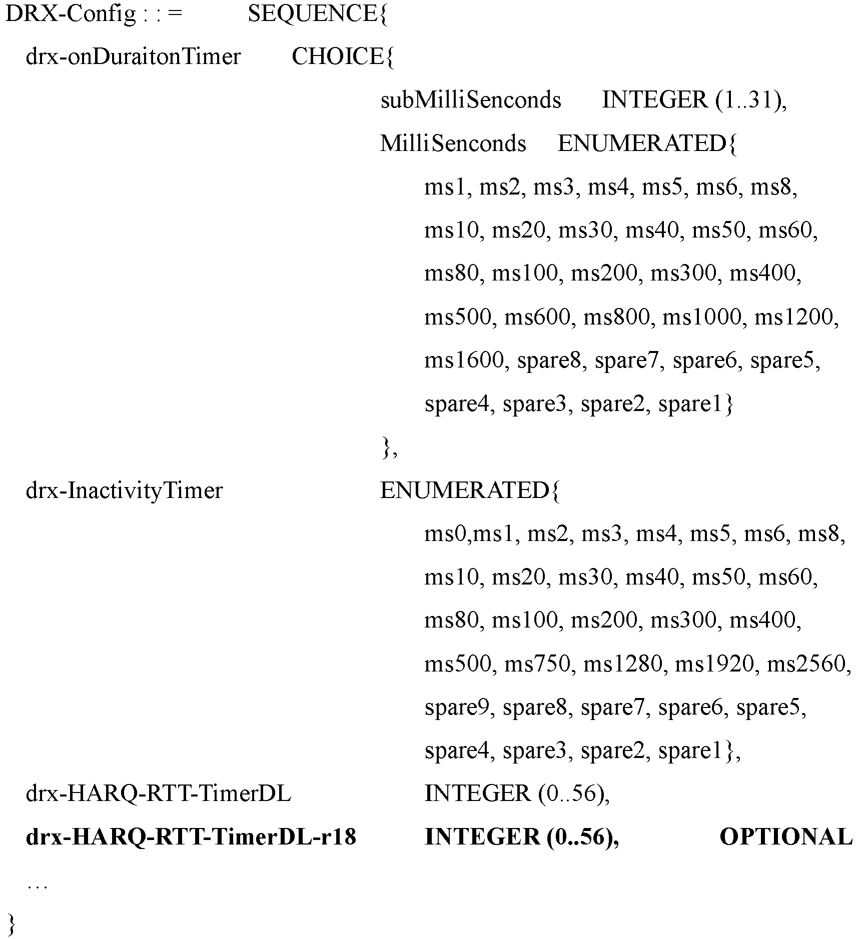

It should be understood that the configuration value of the foregoing parameter may be a time unit such as a millisecond, a slot, or a symbol. This is not limited in this application.

It should be understood that a duration may be all determined by using a timer in this embodiment of this application. Therefore, determining the first duration may also be expressed as determining the first timer, and prolonging the second duration may also be expressed as prolonging the second timer. No extra impact is imposed on the technical solutions of this application regardless of the expression of a duration or a timer. For ease of description, the duration is collectively used in this application. However, this should not be construed as a limitation. A person skilled in the art may obtain the duration by using a method such as a timing device, a timer, or a timing identifier based on this application. This shall all fall within the protection scope of this application.

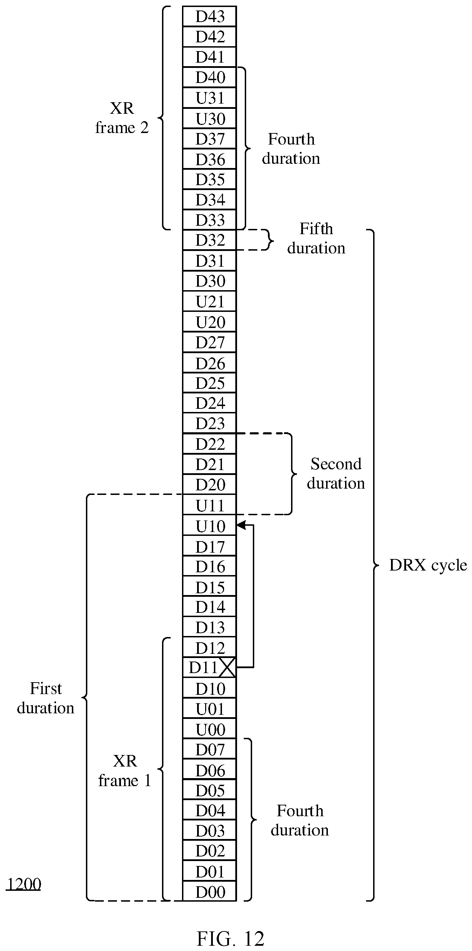

FIG. 12 is a schematic diagram of another specific example of an information transmission method according to this application.

In this embodiment of this application, the technical solutions of this application may be applied to XR transmission in DRX configuration. A first communication apparatus is woken up before a next on duration drx-onDuration or a next XR frame arrives, that is, the method in the manner 2 in FIG. 10, to receive retransmitted data before the next XR frame.

As described in FIG. 11 above, in the technical solutions of this application, a first timer delayBudgetTimer parameter may be added to DRX configuration DRX-config (that is, first configuration information). The first timer delayBudgetTimer may be used to determine a first duration. The first duration is used by the first communication apparatus (for example, a terminal device) to time an air interface delay budget PDB. The first duration (that is, the first timer delayBudgetTimer) is periodic. A periodicity of the first duration may be the same as or different from a DRX cycle. This is not limited in this application. An XR service is used as an example. In this case, there is not enough time for displaying, to a user on a terminal side, XR frame data that exceeds the air interface delay budget. Therefore, the retransmitted data is delayed, so that the first communication apparatus receives the retransmitted data before transmission of a next XR frame. This can ensure frame integrity, that is, help decoding of the next frame; and does not interrupt the first communication apparatus in entering a sleep mode. For example, for some fields of the first duration in the DRX configuration, refer to the descriptions in FIG. 11. Details are not described herein again.

As an example rather than a limitation, FIG. 12 shows another implementation method for transmitting two consecutive XR frames (an XR frame 1 and an XR frame 2) when a subcarrier spacing (sub-carrier spacing, SCS) is 30 kHz and a TDD uplink-downlink slot ratio is 8:2. Data transmission of the XR frame 1 at D11 fails. After HARQ acknowledgment information is reported at U10, a location (for example, D22) corresponding to an end of a second duration exceeds a location (U11) corresponding to an end of a first duration. In this case, a first communication apparatus does not start timing a third duration (starting a third timer drx-retransmissionTimerDL) after the end of the second duration. To be specific, the first communication apparatus does not wake up to correspondingly retransmit control information for a HARQ process monitor corresponding to data at D11 after the end of the second duration, but wakes up in a fifth duration before a next XR frame, that is, the XR frame 2 (or an on duration on-duration of a next DRX cycle or a start of a next DRX cycle) to receive retransmitted data. The fifth duration may include K=X+Y slots. For definitions of X and Y, refer to the descriptions in FIG. 11. Details are not described herein again.

In this embodiment of this application, the first communication apparatus only needs to wake up in the fifth duration before the next XR frame (and/or the on duration on-duration of the next drx cycle) to receive the retransmitted data. The fifth duration may include K=X+Y slots. For definitions of X and Y, refer to the descriptions in FIG. 11. Details are not described herein again.

Herein, K may be used to determine the fifth duration. The fifth duration may be determined in a plurality of manners. This is not limited in this application. For details, refer to the foregoing descriptions. Details are not described herein again.

In the transmission shown in FIG. 12, a length of the first duration (that is, a first timer delayBudgetTimer) is 10 ms, and a start location is D00. Therefore, an end location of the first duration is U11. An error occurs in a TB transmitted in the XR frame 1 at D11. After corresponding HARQ acknowledgment information is reported at U10, the first communication apparatus starts the second duration (that is, a second timer drx-HARQ-RTT-TimerDL). Because a slot corresponding to the end of the second duration, for example, D22, exceeds a slot U11 corresponding to the end of the first duration, the first communication apparatus no longer starts the third duration (that is, a third timer drx-retransmissionTimerDL). In this case, X=1, and Y=0, that is, K=1. In this embodiment, the XR frame 2 and a fourth duration DRX-onDuration in the next cycle start from D33. Therefore, the first communication apparatus may wake up in a start slot of the fifth duration to receive retransmitted data. The start slot of the fifth duration is D33-K=D32.

FIG. 12 is used as an example. Retransmission of only data at D11 in the XR frame 1 needs to be delayed before transmission of the XR frame 2. Therefore, in this embodiment, it may be considered that the fifth duration is K slots (K=1), and a start slot and an end slot of the fifth duration are D32. In other words, a length of the fifth duration includes only the slot D32. It should be noted that the fifth duration does not affect the next DRX cycle, that is, does not affect start locations of the first duration and the fourth duration in the next DRX cycle. Specifically, a start time unit of the next DRX cycle is still D33, and timing of the first duration starts again at D33 (that is, the first timer drx-DelayBudgetTimer is restarted at D33). The first communication apparatus is indicated to wake up in the fifth duration before D33, and monitors and receives retransmission scheduling control information in the fifth duration. The fifth duration may be determined based on a quantity of HARQ processes whose acknowledgment information is a NACK in HARQ processes for which a slot corresponding to an end of each second duration is not later than the slot corresponding to the end of the first duration. In this case, the DRX cycle may have only one fifth duration.

In another possible implementation, an end slot of the fifth duration may be alternatively an end slot of the fourth duration. In other words, the fifth duration includes the fourth duration. The fourth duration may be an on duration in the next DRX cycle DRX-onDuration. The first communication apparatus monitors control information in the fourth duration. Alternatively, the fifth duration may be obtained through advancing the fourth duration by K slots. In addition, when the fourth duration is advanced by the K slots, the fourth duration is correspondingly prolonged by the K slots. Alternatively, a fifth duration in a cycle may be obtained through prolonging a fourth duration in a next adjacent cycle by K slots. It should be noted that the fifth duration obtained through advancing the fourth duration by the K slots is valid only in this DRX cycle, and does not affect the next DRX cycle. For example, it is assumed that there are three DRX cycles: DRX 0, DRX 1, and DRX 2 that respectively correspond to start moments of starting an on duration DRX-onDuration by the first communication apparatus: 0 ms, 10 ms, and 20 ms. Timeout retransmitted data in DRX 0 affects a start moment of starting a DRX 1 on duration DRX1-onDuration by the first communication apparatus (that is, the first communication apparatus may wake up before a10-ms moment), but does not affect a start moment (still a 20-ms moment) of starting a DRX 2 on duration DRX2-onDuration by the first communication apparatus. It should be understood that the start moment of the DRX 2 on duration DRX2-onDuration may change due to retransmission in DRX 1 in this solution. It should be noted that the start moments of the first durations of DRX 0, DRX 1, and DRX 2 do not change (still 0 ms, 10 ms, and 20 ms). Optionally, to reduce decoding impact of the XR frame 1 on the XR frame 2, when the fifth duration is determined, a decoding delay at an application layer and a transmission delay from a physical layer to the application layer may be further considered. For a specific method, refer to the descriptions in FIG. 11. Details are not described herein again.

In this embodiment of this application, the technical solutions of this application may also be applied to a semi-persistent transmission scenario. For example, in a downlink scenario, XR transmission is performed through semi-persistent scheduling SPS. A probability that a terminal enters a sleep mode is increased through delaying timeout data retransmission to a next SPS transmission opportunity, thereby reducing power consumption of the terminal.

In an existing SPS transmission process, if an error occurs in data transmission, after the first communication apparatus (for example, a terminal device) reports HARQ acknowledgment information, a second communication apparatus (for example, a base station) schedules the retransmitted data for the first communication apparatus in a specific slot by using control information (for example, DCI) scrambled by using a CS-RNTI. Therefore, the first communication apparatus (for example, the terminal device) needs to monitor control information, to receive the retransmitted data. In an existing solution, a slot in which the second communication apparatus schedules SPS retransmission depends on a PDCCH monitoring cycle configured by the second communication apparatus for the first communication apparatus. Specifically, the monitoring cycle is not directly associated with an SPS cycle, and may be independently configured. For example, in the existing SPS configuration scenario shown in FIG. 8, when an SCS is 30 kHz and a TDD uplink-downlink slot ratio is 8:2, if a PDCCH monitoring cycle is 5 ms and an on duration is two slots, the first communication apparatus can monitor the control information only in D00, D01, D10, D11, D20, D21, and the like in FIG. 8, the second communication apparatus can schedule retransmission only in the slots, and the first communication apparatus monitors retransmission control information in the foregoing slots. In this case, because the first communication apparatus does not determine the specific slot in which the second communication apparatus schedules retransmission, the first communication apparatus needs to constantly blindly detect the scheduling control information to receive retransmission.

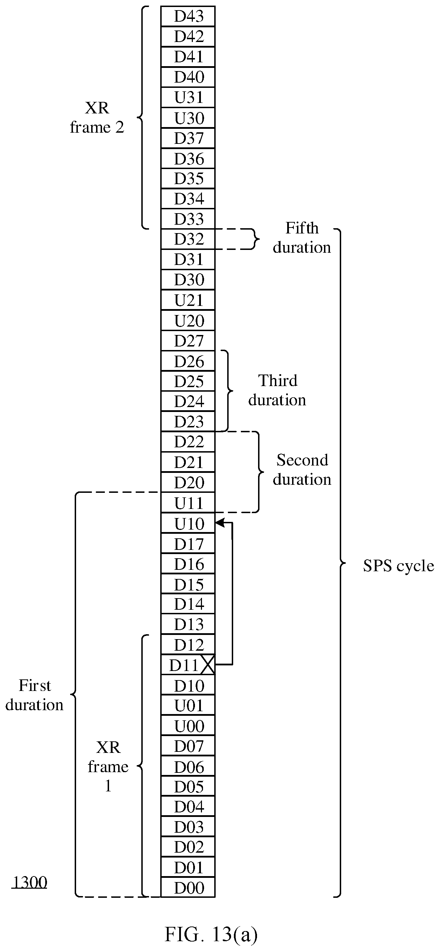

FIG. 13(a) shows an embodiment of receiving retransmitted data in an SPS scenario. In this embodiment of this application, a first timer delayBudgetTimer parameter may be added to SPS configuration SPS-config (that is, first configuration information). The first timer delayBudgetTimer has a same function as the foregoing first timer delayBudgetTimer in the DRX configuration, and may be used to determine a first duration. The first duration is used by a first communication apparatus (for example, a terminal device) to time an air interface delay budget PDB. The first duration (that is, the first timer delayBudgetTimer) is periodic. A periodicity of the first duration may be the same as or different from an SPS cycle. This is not limited in this application. An XR service is used as an example. In this case, there is not enough time for displaying, to a user on a terminal side, XR frame data that exceeds the air interface delay budget. In addition, a second timer retransmissionProcessingTimer may be further added to the SPS configuration SPS-config. The second timer retransmissionProcessingTimer has a same function as the foregoing second timer drx-HARQ-RTT-TimerDL in the DRX configuration, and may be used to determine a second duration. The second duration indicates an estimated minimum duration from a first moment at which the first communication apparatus reports acknowledgment information to a time at which the first communication apparatus receives retransmission scheduling control information corresponding to the acknowledgment information. In SPS transmission, the second duration may be used by the first communication apparatus to monitor and determine the retransmission scheduling control information. It should be noted that, similar to drx-HARQ-RTT-TimerDL in a DRX mechanism, each HARQ process in SPS data may have its own second duration (that is, a second timer retransmissionProcessingTimer). After the second duration ends, if acknowledgment information of the HARQ process corresponding to the second duration is a NACK, timing of a third duration starts (that is, a third timer slotMonitoringTimer is started). The third timer slotMonitoringTimer may be used to determine the third duration. The first communication apparatus may monitor control information (for example, DCI) in an on duration of the third duration. For example, the first duration, the second duration, and the third duration may be respectively referred to as drx-delayBudgetTimer, retransmissionProcessingTimer, and slotMonitoringTimer that are shown in the following bold font, and some fields of the SPS configuration may be shown as follows:

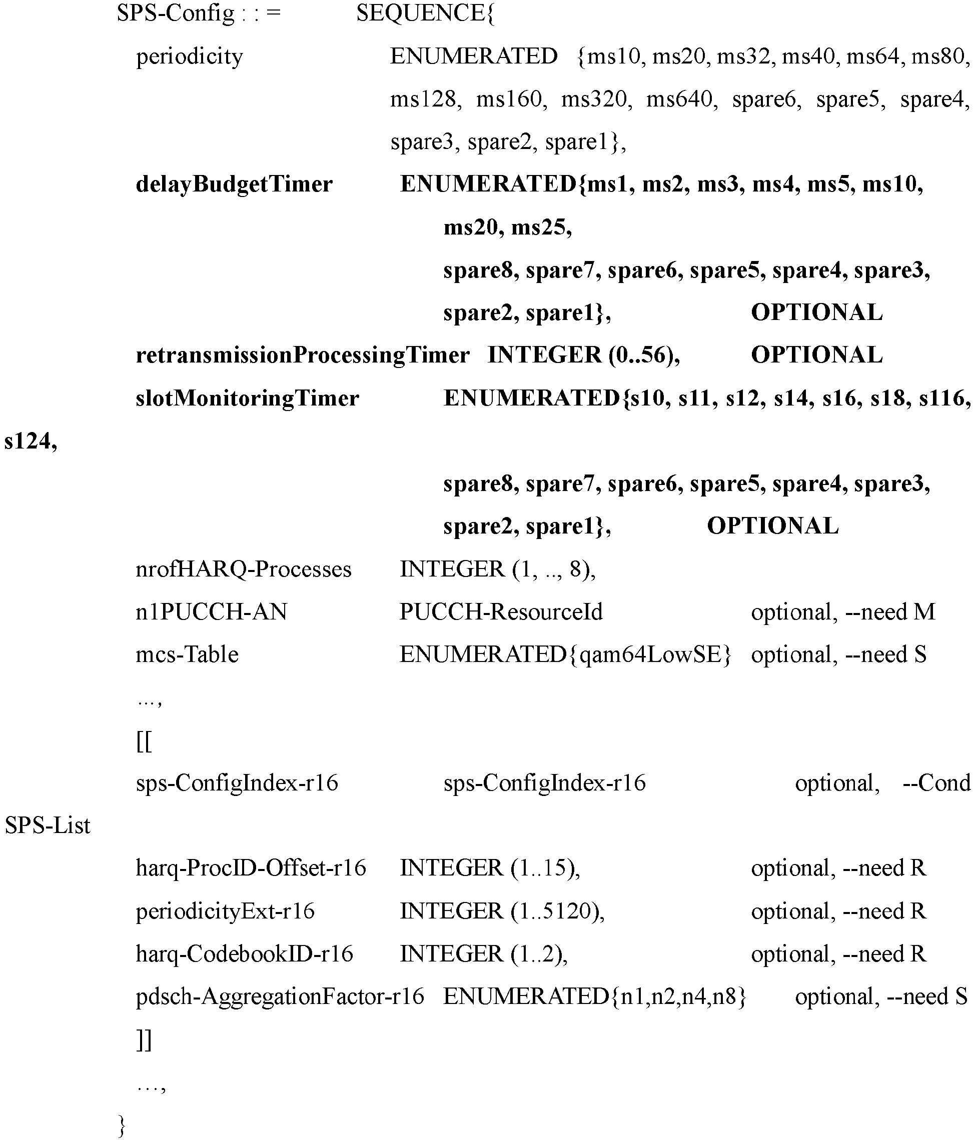

A selectable value of delayBudgetTimer is in a unit of millisecond (ms). For example, ms1 indicates that an on duration of delayBudgetTimer is 1 ms. A selectable value of retransmissionProcessingTimer is in a unit of a symbol. A value of slotMonitoringTimer is in a unit of a slot. For example, sl4 indicates that an on duration of slotMonitoringTimer is four slots.

It should be understood that time units of the first duration (that is, the first timer delayBudgetTimer), the second duration (that is, the second timer retransmissionProcessingTimer), and the third duration (that is, the third timer slotMonitoringTimer) may be alternatively other timing units, for example, a millisecond, a symbol, or a slot. This is not limited in this application.

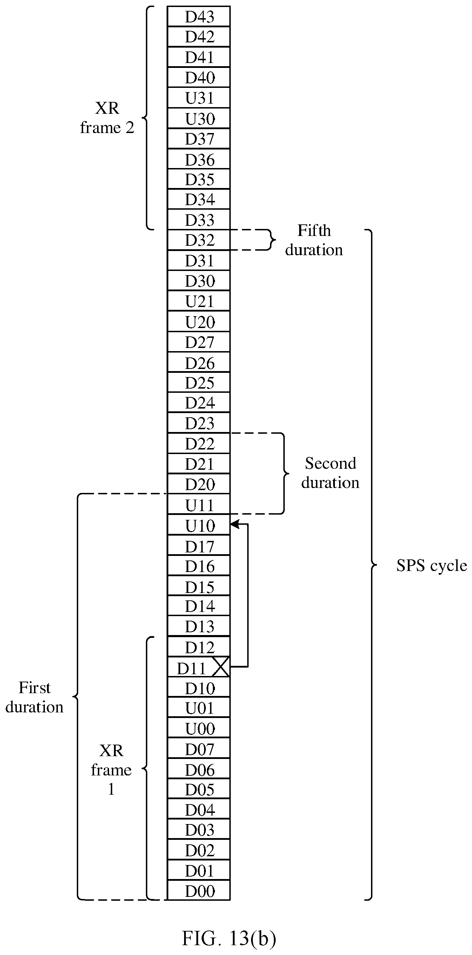

As an example rather than a limitation, FIG. 13(b) shows an example of transmission of two consecutive XR frames (an XR frame 1 and an XR frame 2) when an SCS is 30 kHz and a TDD uplink-downlink slot ratio is 8:2. Transmission of the XR frame 1 starts from D00, and includes 11 downlink slots. Transmission of the XR frame 2 starts from D33, and includes nine downlink slots. An XR frame transmission cycle is 16.5 ms, and an SPS cycle is also 16.5 ms. In other words, D00 to D32 are a first SPS cycle. It is assumed that the first duration is 10 ms, and timing starts from a start location of each SPS cycle or a start location of an XR service cycle, that is, D00 and D33. In this embodiment, transmission of data transmitted at D11 in the XR frame 1 fails, and acknowledgment information of a corresponding HARQ process is reported by a first communication apparatus to a second communication apparatus at U10. A second timer retransmissionProcessingTimer is started after the reporting. The second timer retransmissionProcessingTimer may be used to determine a second duration. In FIG. 13(a), a slot corresponding to an end of the second duration is D22. Because the acknowledgment information of the HARQ process corresponding to the second timer is a NACK, a third timer slotMonitoringTimer is started in a next symbol after D22. The third timer slotMonitoringTimer is used to determine a third duration. The first communication apparatus monitors control information in the third duration. It is assumed that an end location of the second timer is exactly a final symbol in D22. Therefore, the third timer is started at D23, and monitoring of control information is started.

In this case, the slot corresponding to the end of the second duration, for example, D23, is later than the slot U11 corresponding to an end of the first duration. Therefore, retransmission corresponding to the data transmitted in D11 does not help improve user experience, and may interrupt the first communication apparatus in entering a sleep mode or prevent the first communication apparatus from entering a sleep mode and therefore cause extra power consumption overheads. Therefore, in the implementation method shown in FIG. 13(b), to avoid interrupting the first communication apparatus in entering the sleep mode, the first communication apparatus does not enter the third duration (that is, does not start the third timer slotMonitoringTimer) after the end of the second duration. The first communication apparatus no longer monitors control information after the end of the second duration, but starts to receive retransmitted data in a fifth duration before a next SPS transmission opportunity. The fifth duration may include K slots. For a definition of K, refer to the descriptions in FIG. 11. Details are not described herein again.

Optionally, to reduce decoding impact of the XR frame 1 on the XR frame 2, when the fifth duration is determined, a decoding delay at an application layer and a transmission delay from a physical layer to the application layer may be further considered. For a specific method, refer to the descriptions in FIG. 11. Details are not described herein again.

According to the technical solutions of this application, power consumption overheads caused by sleep interruption of a receive end due to reception of retransmitted data can be reduced, and reliable data transmission can be ensured.

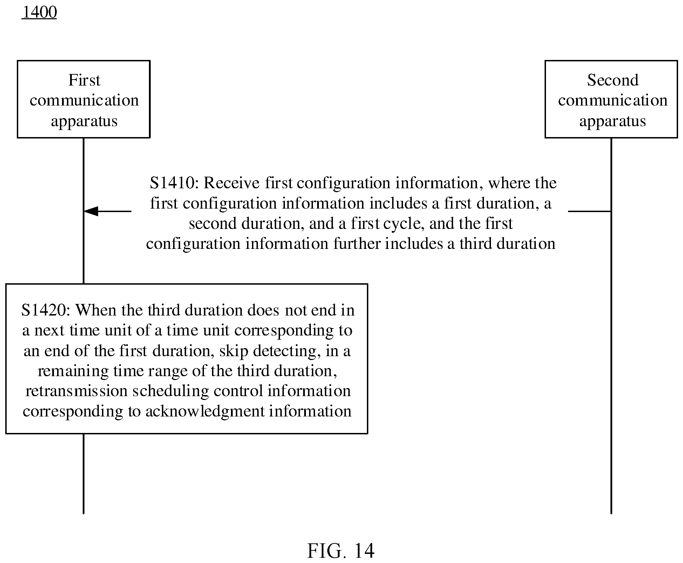

FIG. 14 is a schematic flowchart of another example of an information transmission method according to this application.

S1410: A first communication apparatus receives first configuration information. The first configuration information includes a first duration, a second duration, and a first cycle. The first configuration information further includes a third duration.

The first duration is less than the first cycle. The first duration starts at a start moment of the first cycle. The second duration indicates an estimated minimum duration from a first moment at which the first communication apparatus reports acknowledgment information to a time at which the first communication apparatus receives retransmission scheduling control information corresponding to the acknowledgment information, or the second duration indicates an estimated minimum duration from a second moment at which the first communication apparatus transmits uplink/sidelink data to a time at which the first communication apparatus receives retransmission scheduling control information corresponding to the uplink/sidelink data. The third duration indicates a maximum duration from a next time unit of a time unit corresponding to an end of the second duration to the time at which the first communication apparatus receives the retransmission scheduling control information corresponding to the acknowledgment information, or the third duration indicates a maximum duration from a next time unit of a time unit corresponding to an end of the second duration to a time at which the first communication apparatus receives a scheduling grant of the uplink/sidelink data.

Optionally, the first cycle is a discontinuous reception DRX long cycle; or the first cycle is a DRX short cycle; or the first cycle is a semi-persistent transmission cycle; or the first cycle is a transmission cycle of a service.

Optionally, the acknowledgment information is acknowledgment information of a hybrid automatic repeat request HARQ process.

S 1420: When the third duration does not end in a next time unit of a time unit corresponding to an end of the first duration, the first communication apparatus does not monitor, in a remaining time range of the third duration, the retransmission scheduling control information corresponding to the acknowledgment information.

Optionally, the method further includes: The first communication apparatus monitors, in K consecutive time units that are before a time unit corresponding to an end of the first cycle and that are adjacent to the time unit corresponding to the end of the first cycle, the retransmission scheduling control information corresponding to the acknowledgment information.

In this way, according to the technical solutions of this application, fast and reliable transmission of retransmitted data can be ensured, and power consumption overheads caused by sleep interruption of a receive end due to reception of the retransmitted data can be reduced.

Optionally, the X consecutive time units are determined based on a quantity of HARQ processes for which a third duration does not end in the next time unit of the time unit corresponding to the end of the first duration; and/or determined based on a decoding capability of the first communication apparatus; and/or determined based on the third duration; and/or configured by using the first configuration information.

Optionally, the first configuration information is further used to indicate a fourth duration. The fourth duration indicates a duration for which the first communication apparatus monitors control information. The method further includes: The first communication apparatus determines a fifth duration. The first communication apparatus monitors control information in the fifth duration. A start location of the fifth duration in the first cycle is determined through shifting a start location of the fourth duration forward by the X consecutive time units.

Optionally, a next time unit of a time unit corresponding to an end of the fifth duration in the first cycle is a time unit corresponding to a start of the fourth duration in a next adjacent first cycle; or a time unit corresponding to an end of the fifth duration in the first cycle is a time unit corresponding to an end of the fourth duration in a next adjacent first cycle.

The fifth duration is valid only in the first cycle.

Optionally, the first configuration information further includes first indication information. The first indication information indicates an offset of a start moment of the first duration relative to a start moment of the first cycle.

According to the technical solutions of this application, the power consumption overheads caused by sleep interruption of the receive end due to reception of the retransmitted data can be reduced, and reliable data transmission can be ensured.

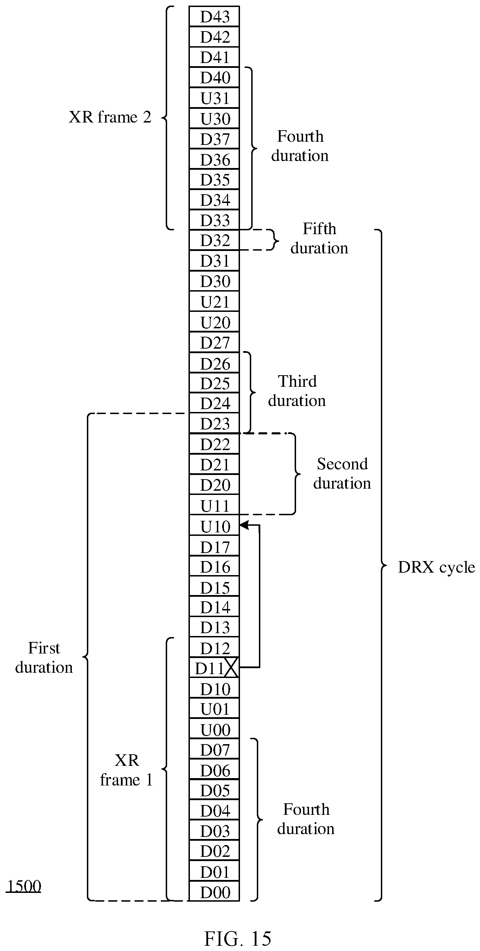

In the technical solutions in this embodiment of this application, when the third duration does not end in the next time unit corresponding to the end of the first duration, the retransmission scheduling control information corresponding to the HARQ process corresponding to the acknowledgment information is not monitored in the remaining time range of the third duration. As an example rather than a limitation, FIG. 15 is a schematic diagram of another specific example of an information transmission method according to this application, and shows a transmission scenario of two consecutive XR frames (an XR frame 1 and an XR frame 2) when a subcarrier spacing SCS is 30 kHz and a time division duplex TDD uplink-downlink slot ratio is 8:2. Transmission of the XR frame 1 starts from D00, and includes 11 downlink slots. Transmission of the XR frame 2 starts from D33, and includes nine downlink slots. A transmission interval between the two XR frames is approximately 16.5 ms. ADRX cycle is also 16.5 ms. An XR frame cycle or the DRX cycle may be used to determine a first cycle.

Timing of an on duration timer drx-onDuraitonTimer starts from a start location of a DRX cycle, that is, from D00 and D33. The on duration timer drx-onDuraitonTimer is used to determine a fourth duration. It should be understood that the DRX cycle may be a DRX long cycle, or may be a DRX short cycle. This is not limited in this application. In addition, a delay budget timer drx-delayBudgetTimer is started from the start location of the DRX cycle, and the delay budget timer drx-delayBudgetTimer is used to determine the first duration. It should be noted that, in this embodiment, a start location of a first duration and a start location of the fourth duration (that is, an on duration timer drx-onDuraitonTimer) are the same, and are both the start location of the DRX cycle, that is, D00 and D33 in the figure. For example, for the first duration (or may be referred to as drx-delayBudgetTimer) in DRX configuration, refer to the descriptions in FIG. 11. Details are not described herein again.

In FIG. 15, when data transmission of the XR frame 1 fails at D11, HARQ acknowledgment information is reported at U10 by a first communication apparatus (for example, a terminal) to a second communication apparatus (for example, a base station). After the HARQ acknowledgment information is reported, a second timer drx-HARQ-RTT-TimerDL is started for a corresponding HARQ process. The second timer may be used to determine a second duration. The second duration indicates an estimated minimum duration from a first moment at which the first communication apparatus reports the acknowledgment information to a time at which the first communication apparatus receives retransmission scheduling control information corresponding to the acknowledgment information, or an estimated minimum duration from a second moment at which the first communication apparatus transmits uplink/sidelink data to a time at which the first communication apparatus receives retransmission scheduling control information corresponding to the uplink/sidelink data. It should be noted that the first duration occurs only once in each DRX cycle and preferably has a same start location as the DRX cycle, and each HARQ process received in drx-onDuration has its own second duration.

In an existing solution, after reporting NACK acknowledgment information of D11 at U10, the first communication apparatus starts timing of the second duration corresponding to the HARQ process (that is, starts the second timer Drx-HARQ-RTT-TimerDL), and the first communication apparatus may not monitor control information (for example, DCI) in the second duration. After the second duration ends (that is, the second timer Drx-HARQ-RTT-TimerDL expires), the first communication apparatus starts a third timer drx-retransmissionTimerDL. The third timer drx-retransmissionTimerDL may be configured to determine a third duration. The first communication apparatus may monitor control information in an on duration of the third duration.

As shown in FIG. 15, a slot (D26) corresponding to an end of the third duration exceeds a slot (D23) corresponding to an end of the first duration. Therefore, if the third duration does not end in a next slot of a slot corresponding to the end of the first duration, user experience cannot be improved through monitoring control information in the rest of the third duration, thereby causing extra power consumption overheads because the first communication apparatus is affected in entering a sleep mode. Therefore, in this embodiment, when the third duration does not end in the next slot of the slot corresponding to the end of the first duration, the first communication apparatus no longer monitors, in the rest of the third duration, retransmission scheduling control information of a HARQ process corresponding to the third duration. Specifically, if the first communication apparatus does not monitor, at D23, scheduling control information of a HARQ process corresponding to D11, the first communication apparatus no longer monitors the scheduling control information of the HARQ process in the rest of the third duration (D24 to D26). Alternatively, the third duration is ended when the third duration does not end in the next slot of the slot corresponding to the end of the first duration. The first communication apparatus wakes up in a fifth duration before a next XR frame, that is, the XR frame 2 (or an on duration on-duration of a next DRX cycle or a start of a next DRX cycle) to receive retransmitted data. The fifth duration may include K=X+Y slots. Herein, X is a quantity of slots required for data of a corresponding HARQ process for which the third duration does not end in a next time unit of a time unit corresponding to the end of the first duration. As shown in FIG. 15, only data at D11 needs to be retransmitted, and therefore X is 1. Herein, Y is a quantity of overlapping slots between uplink slots and X slots occupied by data retransmission before the XR frame 2. Specifically, when a slot corresponding to the XR frame 2 (or a start slot of drx-onDuration or a start slot of the first duration) is advanced by X slots, there may be Y uplink slots in the X slots. In FIG. 15, there is no case in which a delayed downlink slot occupied for retransmitting the data overlaps an uplink slot. Therefore, Y is 0. In this embodiment, a value of K may be X+Y.

Specifically, for a manner of obtaining the fifth duration, refer to the descriptions corresponding to FIG. 11, FIG. 12, and FIG. 13(a) and FIG. 13(b). Details are not described herein again.

In the foregoing method, the first configuration information includes or is DRX configuration or SPS configuration. In another possible implementation, the first configuration information may be alternatively an independent configuration parameter set. For example, the first configuration information may be delay budget configuration delayBudget-config, and some fields of the configuration may be shown as follows:

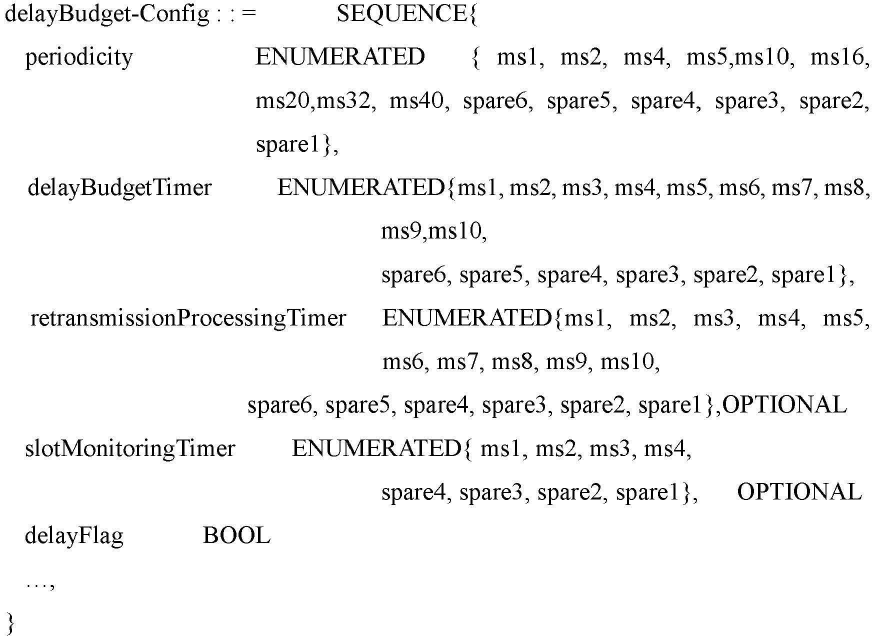

The first timer delayBudgetTimer has a same function as the first timer delayBudgetTimer in the DRX or SPS configuration, and may be used to determine the first duration. The first duration is used by the first communication apparatus (for example, the terminal device) to time an air interface delay budget PDB. For example, the first configuration information includes a periodicity periodicity of the first duration (or referred to as the first timer), and includes the first duration (or referred to as the first timer) delayBudgetTimer. The first duration is valid at a start location of each cycle of delayBudget. In addition, the first configuration information further includes a second timer retransmissionProcessingTimer. The second timer retransmissionProcessingTimer is used to determine a second duration. The second duration indicates an estimated minimum duration from a first moment at which acknowledgment information is reported to a time at which retransmission scheduling control information corresponding to the received acknowledgment information. Optionally, the second duration may be based on the HARQ process. In other words, each HARQ process may have a corresponding second duration. The first configuration information may further include a third timer slotMonitoringTimer. The third timer slotMonitoringTimer is used to determine a third duration. The third duration indicates a maximum duration from a next time unit of a time unit corresponding to an end of the second duration to a time at which the first communication apparatus receives the retransmission scheduling control information corresponding to the acknowledgment information. Optionally, the third duration may be based on a HARQ process. In other words, each HARQ process may have a corresponding third duration. The first communication apparatus monitors the control information of the corresponding HARQ process in the third duration. Specifically, when the first communication apparatus receives the control information of the corresponding HARQ process in the third duration, the third duration of the corresponding HARQ process may end. It should be understood that the first duration, the second duration, and the third duration may be time units such as several milliseconds, a slot, and a symbol, or may be a quantity of times of monitoring control information. This is not limited in this application.

Optionally, the first configuration information may further include a flag delayFlag. The flag delayFlag may be a Boolean number, that is, '1' or '0'. For example, '1' indicates that if the time unit corresponding to the end of the second duration is not earlier than the time unit corresponding to the end of the first duration, or if the third duration does not end in the next time unit of the time unit corresponding to the end of the first duration, retransmission exceeding the first duration may be delayed, in the manners described in FIG. 11, FIG. 12, FIG. 13(a) and FIG. 13(b), and FIG. 15, to the fifth duration before timing of a next first timer delayBudgetTimer starts. A specific manner may be prolonging the second duration, that is, prolonging the second timer retransmissionProcessingTimer (similar to prolonging the second timer drx-HARQ-RTT-TimerDL shown in FIG. 11, including setting a sixth timer drx-HARQ-RTT-ExtTimerDL), or starting the seventh timer drx-HARQ-RTT-TimerDL-r18, or disabling the third timer slotMonitoringTimer (similar to disabling the third timer drx-retransmissionTimerDL shown in FIG. 12), and waking up the first communication apparatus in a time unit corresponding to the fifth duration before timing of the next first timer delayBudgetTimer starts. '0' indicates that delay effect is disabled. In other words, the first communication apparatus receives the retransmitted data according to an existing technical solution.

For example, an implementation of the delay budget configuration delayBudget-config may be configured in the DRX configuration, and may be shown in the following bold front:

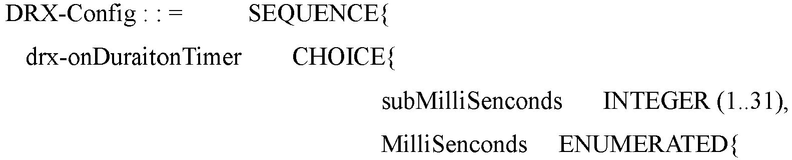

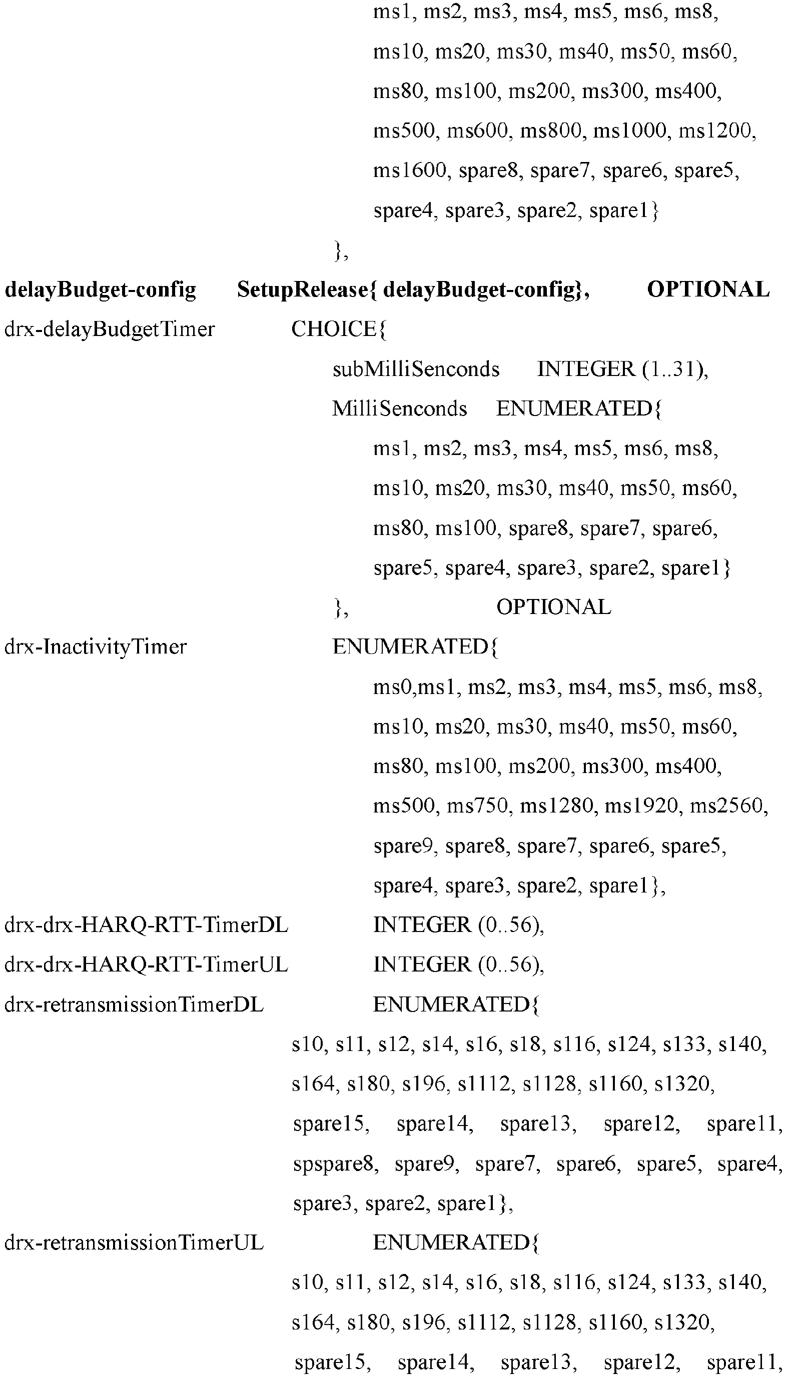

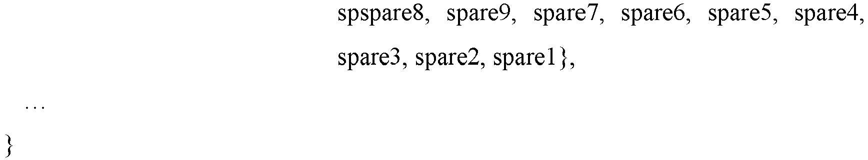

For meanings of related parameters in delayBudget-config, refer to the foregoing descriptions. Details are not described herein again.

In addition, the DRX configuration drx-config and the delay budget configuration delayBudget-config each may have its own cycle. When delayBudget-config is configured in the DRX configuration drx-config, it may be specified that both drx-config and delayBudget-config use a cycle parameter and an offset parameter of the DRX configuration drx-config, that is, drx-LongCycleStartOffset, or may use a cycle in the delay budget configuration delayBudget-config. Alternatively, the DRX configuration drx-config and the delay budget configuration delayBudget-config each use its own cycle. In this case, an air interface delay budget has its own cycle that may be different from the first cycle (that is, the configured cycle of drx-config).

In another implementation, the delay budget configuration delayBudget-config may also be used in an SPS scenario. For example, the delay budget configuration delayBudget-config parameter may be set in the SPS configuration according to the following bold part, as shown in the following:

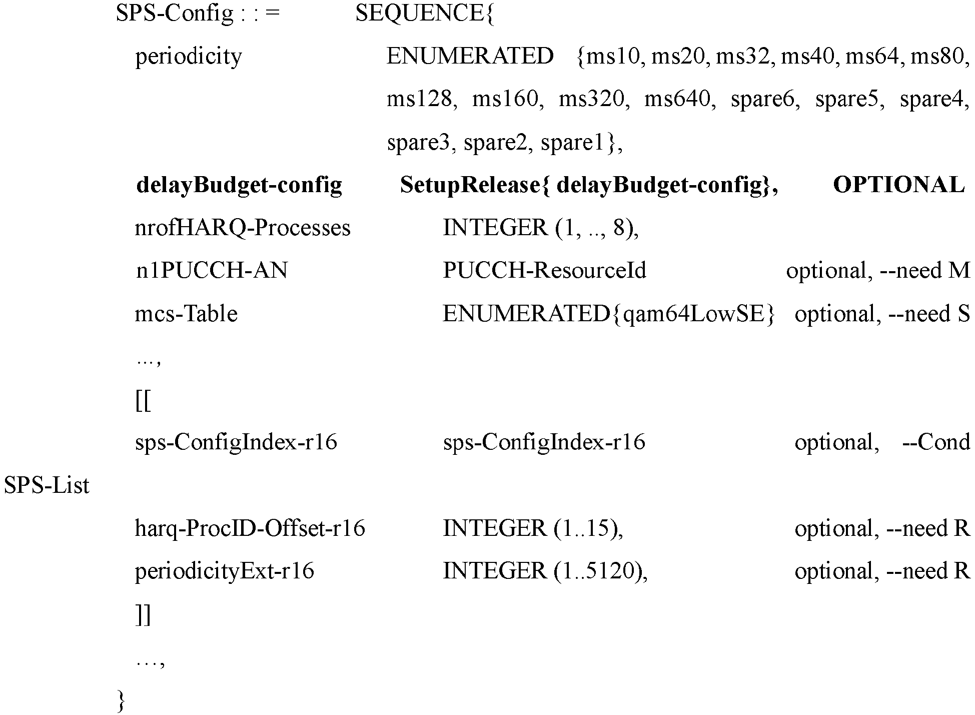

In this way, an independently configured parameter set may be configured together with DRX or SPS, thereby increasing configuration flexibility.

In the foregoing embodiment, a trigger time of the first duration (or the first timer delayBudgetTimer) is related to a DRX cycle or an SPS cycle. To be specific, the first duration (or the first timer delayBudgetTimer) starts at a start location of each drx cycle, or the first duration (or the first timer delayBudgetTimer) starts at a start location of each SPS transmission moment.

In a possible implementation, the first duration (or the first timer delayBudgetTimer) may be not associated with the DRX or SPS cycle. For example, timing of the first duration (or the first timer delayBudgetTimer) may start after a first piece of data is received when drx-onDurationTimer is started, or may start after a first piece of data is received at each SPS transmission moment.

Optionally, a db-slotOffset parameter may be added to drx-config, sps-config, or delayBudget-config, to indicate a start time offset of the first duration (or the first timer delayBudgetTimer) of the first communication apparatus. The offset may be an offset relative to a start location (such as a slot or a symbol) of each DRX or SPS cycle, or may be an offset relative to a moment at which RRC signaling is received. This is not limited in this application. For example, some fields of the delay budget configuration delayBudget-config may be shown as follows. An offset parameter may be shown in the following bold font:

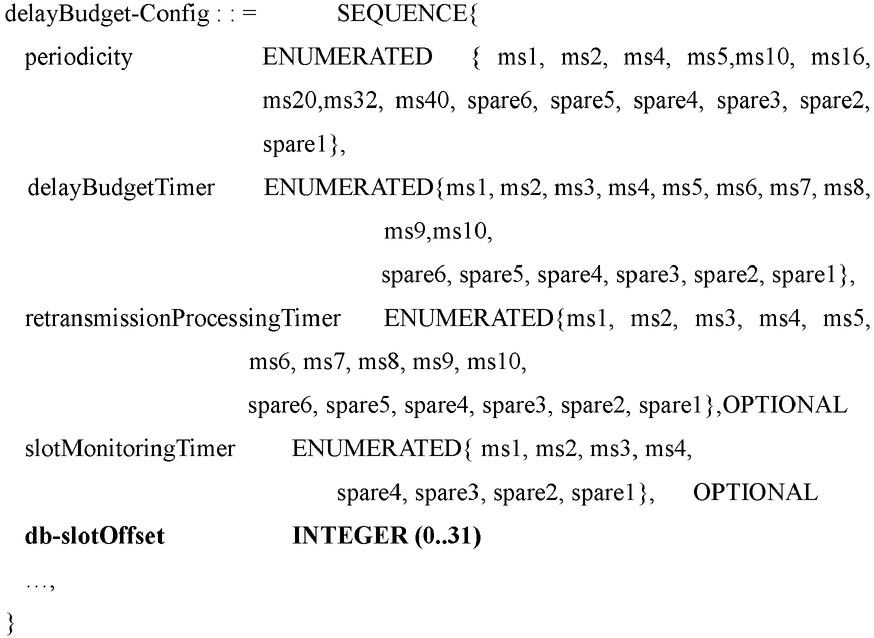

It should be understood that a configured value of the foregoing parameter may be a time unit such as a millisecond, a slot, or a symbol, or may be a quantity of times of monitoring control information. This is not limited in this application. In this way, the first duration may be more flexibly configured through adding the offset parameter.

In the foregoing solution, the first duration (that is, the first timer delayBudgetTimer) is a configured fixed value. In another possible implementation, in actual use, to improve configuration flexibility, a plurality of candidate values may be configured for the first duration (that is, the first timer delayBudgetTimer), and a specific candidate value is activated by using control information.

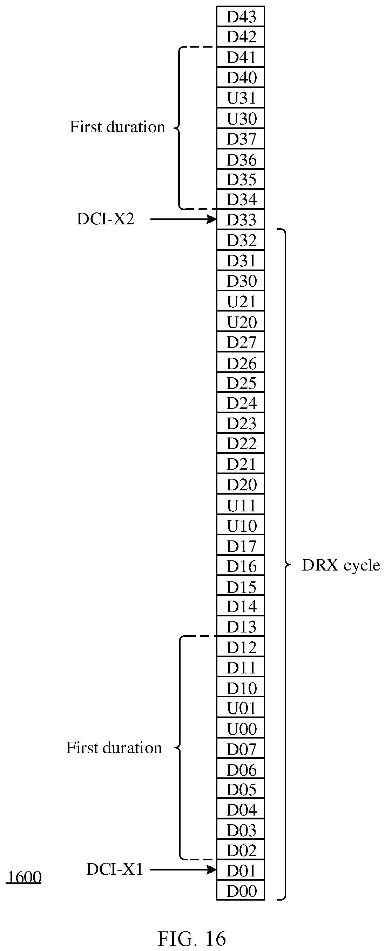

FIG. 16(b) shows an example of transmission of two consecutive XR frames (an XR frame 1 and an XR frame 2) when an SCS is 30 kHz and a TDD uplink-downlink slot ratio is 8:2. Transmission of the XR frame 1 starts from D00, and includes 11 downlink slots. Transmission of the XR frame 2 starts from D33, and includes nine downlink slots. A transmission interval between the two frames is 16.5 ms. In this embodiment, DRX is configured, and a DRX cycle is also 16.5 ms. In other words, D00 to D32 are a first DRX cycle. Downlink transmission is used as an example. The second communication apparatus (for example, the base station) sends, at D00, physical shared channel (physical downlink shared channel, PDSCH) data indicated by DCI-X1. Herein, DCI-X1 may be DCI in any format, and DCI-X1 includes a db-timer field used to start the first timer delayBudgetTimer. After receiving DCI-X1, the first communication apparatus (for example, the terminal device) starts the corresponding first timer drx-delayBudgetTimer in a plurality of first duration candidates of the first configuration information based on content of the db-timer field in DCI-XI. A specific activation time may be a slot in which DCI-X1 is received, a next slot of a slot in which DCI-X1 is received, or a slot of a PDSCH indicated by DCI-X1, or a next adjacent slot of a slot of a physical shared channel PDSCH indicated by DCI-X1. Details are not described herein again.

For example, in this case, some fields of the DRX configuration drx-config may be shown as follows. The candidate first duration (that is, the first timer delayBudgetTimer) may be shown in the following bold font:

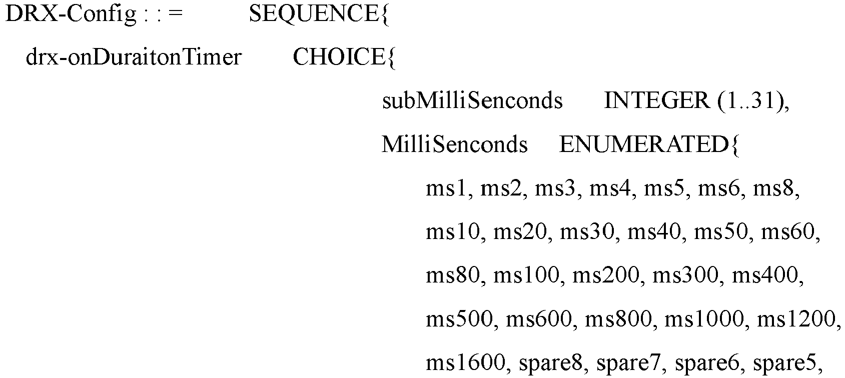

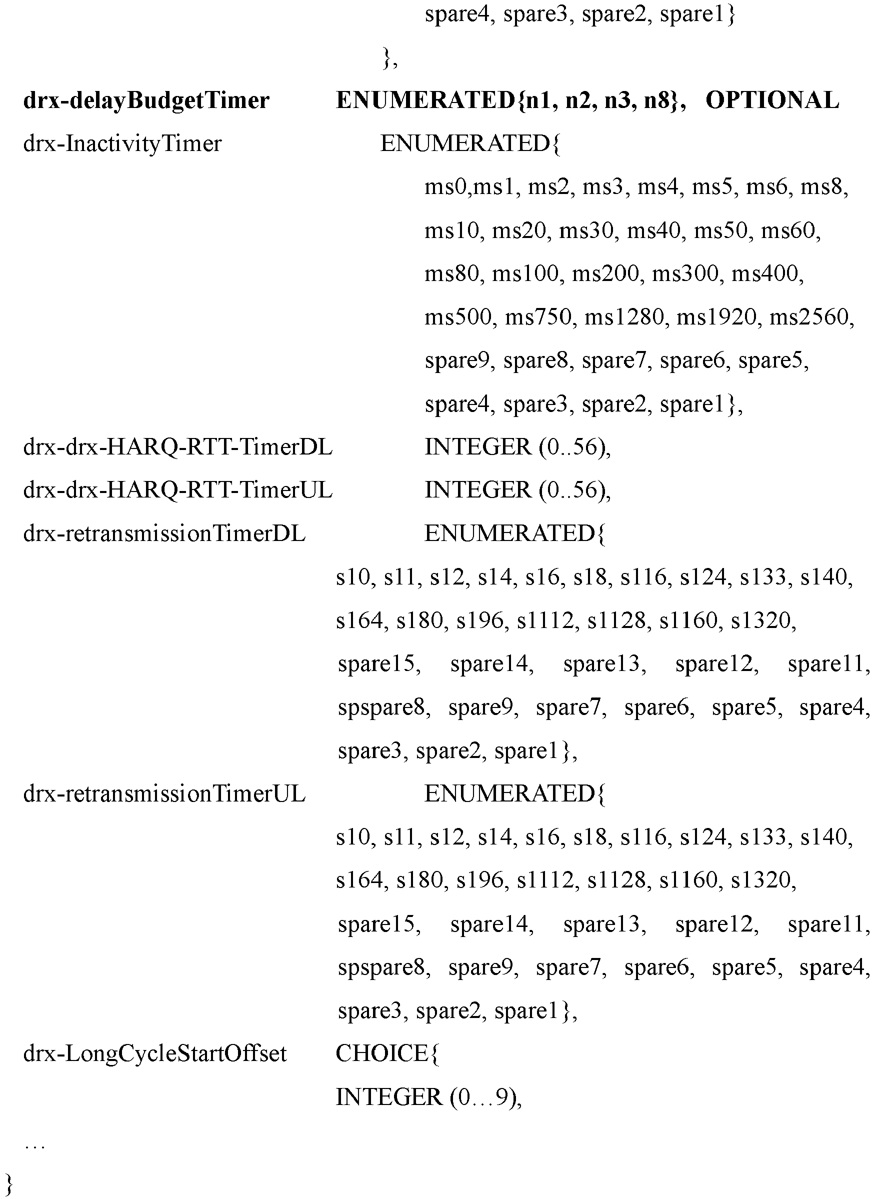

For example, a timing unit of the first duration (that is, the first timer drx-delayBudgetTimer) is a quantity of slots. For example, n8 indicates that the first duration (that is, the first timer drx-delayBudgetTimer) is timed as eight slots. In other words, after the first duration starts, the first duration (that is, the first timer drx-delayBudgetTimer) ends after eight slots. It should be noted that the slot includes an uplink slot and a downlink slot, or may include only a downlink slot or only an uplink slot, or may include only a slot including DCI. The first duration in the foregoing field includes four pieces of candidate information. Therefore, indication information of log2(4)=2 bits (for example, 00, 01, 10, 11) is required for indication. Specifically, a 2-bit field may be added to the DCI to indicate a specific size of drx-delayBudgetTimer (for example, the 2-bit db-timer field is added to the DCI). For example, db-timer='00' represents n1, db-timer='01' represents n2, db-timer='10' represents n4, and db-timer='11' represents n8. After receiving the DCI, the UE starts corresponding delayBudgetTimer in DRX-config based on the db-timer field in the DCI.

Optionally, the first duration (that is, the first timer drx-delayBudgetTimer) may also be in a unit of millisecond, as shown in the following fields in a bold font:

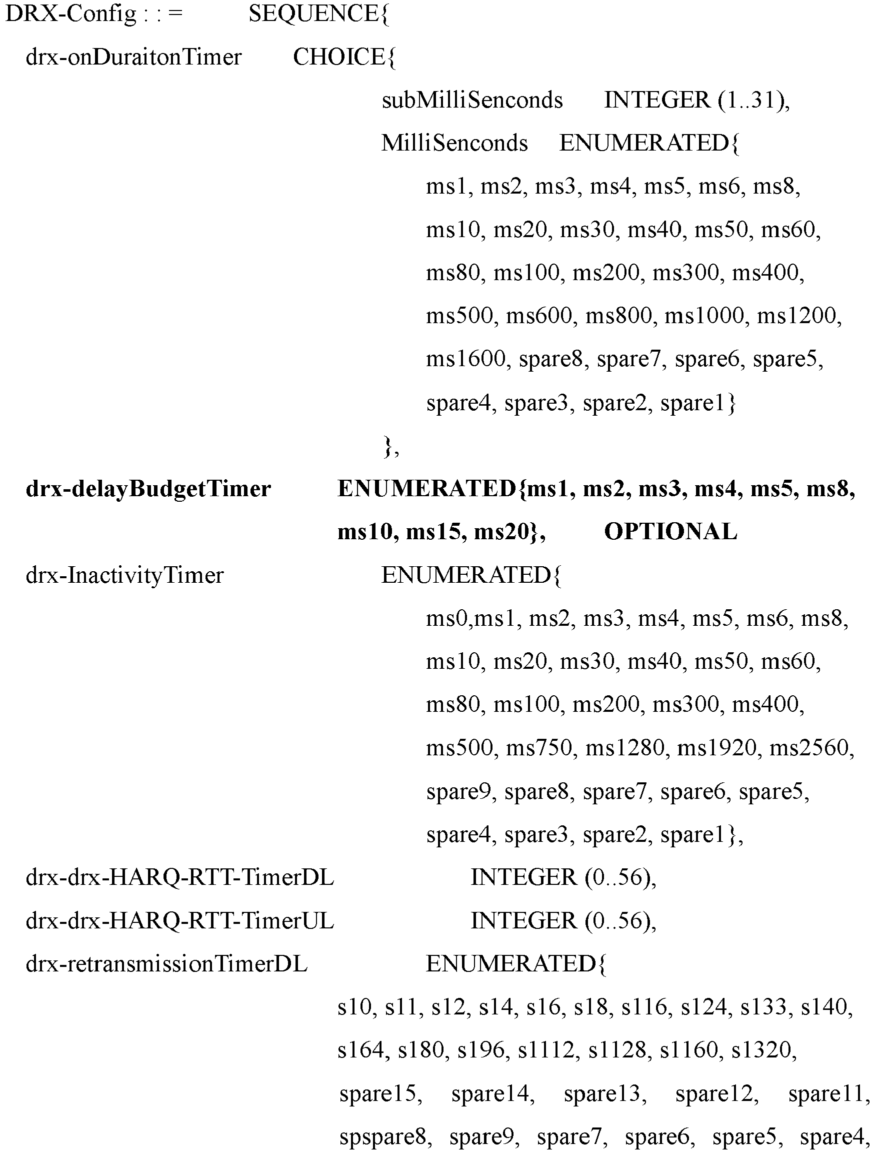

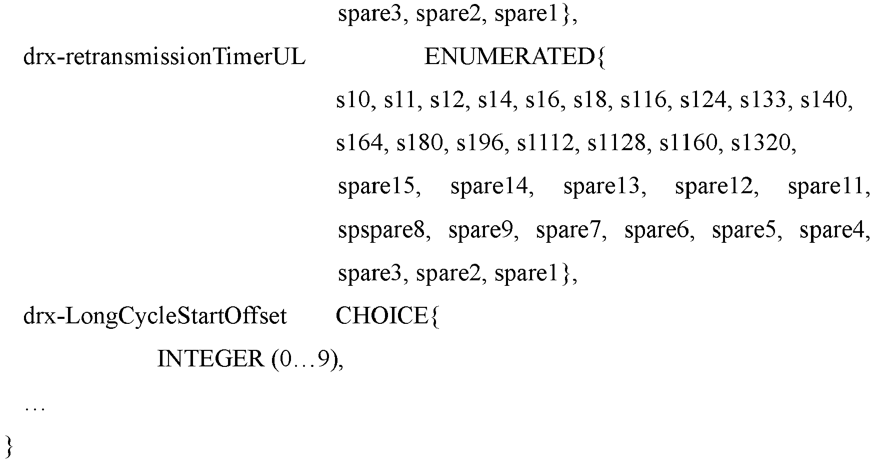

Herein, ms10 indicates that delayBudgetTimer lasts for 10 ms after being started. In other words, delayBudgetTimer is disabled 10 ms after being started. An implementation may be the same as the foregoing manner. For example, 3 bits are added to the DCI field (because there are eight values in total in the foregoing field ms1, ms2, ..., and ms20, log2(8)=3 bits are required) to carry the db-timer field. After receiving the DCI, the first communication apparatus starts corresponding drx-delayBudgetTimer in DRX-config based on the db-timer field.

It should be understood that the foregoing manner of identifying the first duration (that is, the first timer drx-delayBudgetTimer) is merely an example, and should not constitute any limitation on this application. Another manner of identifying the first duration also falls within the protection scope of this application. It should be understood that a configured value of the foregoing parameter may be a time unit such as a millisecond, a slot, or a symbol, or may be a quantity of times of monitoring control information. This is not limited in this application.

As described above, when the first configuration information may include a plurality of first duration candidates, a specific candidate may be activated by using control information, to determine the first duration (that is, the first timer delayBudgetTimer).

It should be noted that, in FIG. 16, DCI-X1 may be used to indicate a corresponding PDSCH in downlink slots of D00 to D12. However, the first duration (that is, the first timer delayBudgetTimer) is not repeatedly started by using a plurality of pieces of DCI-X1. In other words, only one first duration (that is, the first timer delayBudgetTimer) is valid in each DRX cycle. Specifically, a start moment of the first duration (that is, the first timer delayBudgetTimer) in the DRX cycle depends on a first piece of DCI-X1 received in the DRX cycle. Similarly, in a next DRX cycle (a start location is D33) in FIG. 16, the second communication apparatus may dynamically indicate the start location of the first duration by using DCI-X2. It should be understood that DCI-X1 and DCI-X2 may be of a same DCI type, or may be of different DCI types.

Optionally, in this embodiment of this application, the first duration (that is, the first timer delayBudgetTimer) may be activated by using media access control (media access control, MAC) control signaling (control element, CE).

Specifically, a drx-delayBudgetTimer parameter may be added to DRX-config to determine the first duration, and then activation is performed by using a MAC CE. The MAC CE may be obtained based on a logical channel number (logical channel identity, LCID) of a MAC layer packet header. For example, the MAC CE may be referred to as a delayBudgetTimer MAC CE. The MAC CE may be a one-time MAC CE. In other words, after receiving the MAC CE, the UE starts delayBudgetTimer, and an on duration depends on drx-delayBudgetTimer in drx-config. Therefore, if delayBudgetTimer needs to be started in each drx-cycle, a transmit end needs to send a delayBudgetTimer MAC CE in each drx-cycle. Optionally, the delayBudgetTimer MAC CE may activate delayBudgetTimer for a period of time. For example, the MAC CE may include activation signaling DB-Activation MAC CE and deactivation signaling DB-Deactivation MAC CE. The DB-Activation MAC CE is used to activate drx-delayBudgetTimer. In other words, after UE receives the MAC CE, drx-delayBudgetTimer is reset and started for each drx-cycle (which may be long-cycle or short-cycle). For a specific start moment, refer to the foregoing method, for example, an on duration onDuration location of a DRX cycle or a DCI indication. After the first communication apparatus receives DB-Deactivation, drx-delayBudgetTimer is disabled.

It should be understood that, for ease of understanding the technical solutions of this application, downlink transmission is used as an example in the foregoing embodiments to describe the technical solutions of this application in detail. However, the technical solutions of this application may also be applied to uplink transmission and sidelink transmission. For example, in uplink transmission, the first communication apparatus may be a base station, and the second communication apparatus may be a terminal device. For another example, both the first communication apparatus and the second communication apparatus may be terminal devices. For a specific form of a message, refer to an existing technology. This is not limited in this application.

The information transmission method provided in embodiments of this application is described above in detail with reference to FIG. 9 to FIG. 16. The foregoing information transmission method is mainly described from a perspective of interaction between apparatuses. It may be understood that, to achieve the foregoing functions, each apparatus includes a corresponding hardware structure and/or software module for implementing each function. A person skilled in the art should be able to be aware that, in combination with units and algorithm steps in the examples described in embodiments disclosed in this specification, this application can be implemented by hardware or a combination of hardware and computer software. Whether a function is performed by the hardware or hardware driven by the computer software depends on a particular application and design constraint conditions of the technical solutions. A person skilled in the art may use different methods to implement the described functions for each particular application, but it should not be considered that the implementation goes beyond the scope of this application.

It should be understood that, sequence numbers of the foregoing processes do not mean an execution sequence. The execution sequence of the processes should be determined according to functions and internal logic of the processes, and should not be construed as any limitation on the implementation processes of embodiments of this application.

It should be further understood that in embodiments of this application, if there is no specific description and no logical conflict, terms and/or descriptions are consistent and may be mutually referenced between different embodiments, and technical features in different embodiments may be combined based on an internal logical relationship thereof to form a new embodiment.

It may be understood that, in the foregoing embodiments of this application, the method implemented by the communication device may also be implemented by a component (for example, a chip or a circuit) that can be configured in the communication device.

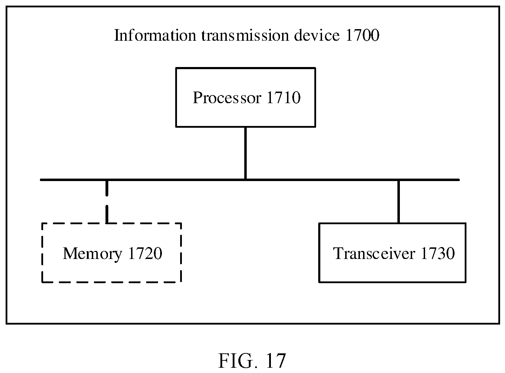

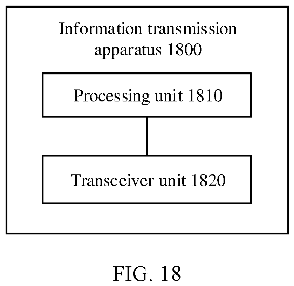

An information transmission apparatus provided in embodiments of this application is described below in detail with reference to FIG. 17 and FIG. 18. It should be understood that descriptions of apparatus embodiments correspond to the descriptions of the method embodiments. Therefore, for content that is not described in detail, refer to the foregoing method embodiments. For brevity, some content is not described again.

In embodiments of this application, a transmit-end device or a receive-end device may be divided into functional modules based on the foregoing method examples. For example, each functional module corresponding to each function may be obtained through division, or two or more functions may be integrated into one processing module. The integrated module may be implemented in a form of hardware, or may be implemented in a form of a software functional module. It should be noted that, in embodiments of this application, division into the modules is an example and is merely logical function division. In actual application, another division manner may be used. An example in which each functional module is obtained through division based on each corresponding function is used below for description.

FIG. 17 is a schematic block diagram of an example of an information transmission device 1700 according to this application. Any device such as the first communication apparatus and the second communication apparatus in any of the method 900 to the method 1600 may be implemented by the information transmission device shown in FIG. 17.

It should be understood that the information transmission device 1700 may be a physical device, a component (for example, an integrated circuit or a chip) of a physical device, or a functional module in a physical device.

As shown in FIG. 17, the information transmission device 1700 includes one or more processors 1710. Optionally, the processor 1710 may invoke an interface to implement receiving and sending functions. The interface may be a logical interface or a physical interface. This is not limited. For example, the interface may be a transceiver circuit, an input/output interface, or an interface circuit. The transceiver circuit, the input/output interface, or the interface circuit that is configured to implement the receiving and sending functions may be separated, or may be integrated together. The transceiver circuit or the interface circuit may be configured to read and write code/data, or the transceiver circuit or the interface circuit may be configured to transmit or transfer a signal.

Optionally, the interface may be implemented through a transceiver. Optionally, the information transmission device 1700 may further include a transceiver 1730. The transceiver 1730 may also be referred to as a transceiver unit, a transceiver machine, a transceiver circuit, or the like, and is configured to implement sending and receiving functions.

Optionally, the information transmission device 1700 may further include a memory 1720. A specific deployment location of the memory 1720 is not specifically limited in this embodiment of this application. The memory may be integrated into the processor, or may be independent of the processor. If the information transmission apparatus 1700 does not include a memory, the information transmission device 1700 may have a processing function, and the memory may be deployed at another location (for example, a cloud system).

The processor 1710, the memory 1720, and the transceiver 1730 communicate with each other through an internal connection path to transmit a control signal and/or a data signal.

It may be understood that although not shown, the information transmission device 1700 may further include another apparatus, for example, an input apparatus, an output apparatus, or a battery.

Optionally, in some embodiments, the memory 1720 may store execution instructions used to perform the method in embodiments of this application. The processor 1710 may execute the instructions stored in the memory 1720 and complete, in combination with other hardware (for example, the transceiver 1730), the performed steps in the method below. For a specific working process and beneficial effects, refer to the descriptions in the foregoing method embodiments.

The method disclosed in embodiments of this application may be applied to the processor 1710, or may be implemented by the processor 1710. The processor 1710 may be an integrated circuit chip and has a signal processing capability. In an implementation process, the steps of the method may be performed through a hardware integrated logic circuit in the processor or by using instructions in a form of software. The foregoing processor may be a general-purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or a transistor logic device, or a discrete hardware component. The processor may implement or perform the methods, the steps, and logical block diagrams that are disclosed in embodiments of this application. The general-purpose processor may be a microprocessor, or the processor may be any conventional processor or the like. The steps of the methods disclosed with reference to embodiments of this application may be directly performed and completed by a hardware decoding processor, or may be performed and completed by a combination of hardware and software modules in a decoding processor. The software module may be located in a mature storage medium in the art, for example, a random access memory (random access memory, RAM), a flash memory, a read-only memory (read-only memory, ROM), a programmable read-only memory, an electrically erasable programmable memory, or a register. The storage medium is located in the memory, and the processor reads instructions in the memory and completes the steps in the foregoing methods in combination with hardware of the processor.

It may be understood that the memory 1720 may be a volatile memory or a nonvolatile memory, or may include both a volatile memory and a nonvolatile memory. The non-volatile memory may be a read-only memory ROM, a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory RAM, and may serve as an external cache. Through illustrative but not limited description, RAMs in many forms may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory in the system and methods described in this specification includes but is not limited to these memories and any memory in another appropriate type.

FIG. 18 is a schematic block diagram of an information transmission apparatus 1800 according to this application.

Optionally, a specific form of the information transmission apparatus 1800 may be a general-purpose computer device or a chip in a general-purpose computer device. This is not limited in this embodiment of this application. As shown in FIG. 18, the information transmission apparatus includes a processing unit 1810 and a transceiver unit 1820.

Specifically, the information transmission apparatus 1800 may be any device in this application, and may implement a function that can be implemented by the device. It should be understood that the information transmission apparatus 1800 may be a physical device, a component (for example, an integrated circuit or a chip) of a physical device, or a functional module in a physical device.

In a possible design, the information transmission apparatus 1800 may be the first communication apparatus in the foregoing method embodiments, or may be a chip configured to implement functions of the first communication apparatus in the foregoing method embodiments.

In an example, the communication apparatus is configured to perform actions performed by the first communication apparatus in FIG. 9, the transceiver unit 1820 is configured to perform step S910, and the processing unit 1810 is configured to perform step S920.

For example, the transceiver unit is configured to receive first configuration information. The first configuration information includes a first duration, a second duration, and a first cycle. The first duration is less than the first cycle. The first duration starts at a start moment of the first cycle. The second duration indicates an estimated minimum duration from a first moment at which the first communication apparatus reports acknowledgment information to a time at which the first communication apparatus receives retransmission scheduling control information corresponding to the acknowledgment information, or an estimated minimum duration from a second moment at which the first communication apparatus transmits uplink/sidelink data to a time at which the first communication apparatus receives retransmission scheduling control information corresponding to the uplink/sidelink data.

The processing unit is configured to: when a time unit corresponding to an end of the first duration is not later than a time unit corresponding to an end of the second duration, and the acknowledgment information is a negative acknowledgment NACK, skip monitoring, in a next time unit of the time unit corresponding to the end of the second duration, the retransmission scheduling control information corresponding to the acknowledgment information.

In another example, the communication apparatus is configured to perform actions performed by the first communication apparatus in FIG. 14, the transceiver unit 1820 is configured to perform step S1410, and the processing unit 1810 is configured to perform step S1420.

For example, the transceiver unit is configured to receive first configuration information. The first configuration information includes a first duration, a second duration, and a first cycle. The first duration is less than the first cycle. The first duration starts at a start moment of the first cycle. The second duration indicates an estimated minimum duration from a first moment at which the first communication apparatus reports acknowledgment information to a time at which the first communication apparatus receives retransmission scheduling control information corresponding to the acknowledgment information, or an estimated minimum duration from a second moment at which the first communication apparatus transmits uplink/sidelink data to a time at which the first communication apparatus receives retransmission scheduling control information corresponding to the uplink/sidelink data. The first configuration information further includes a third duration. The third duration indicates a maximum duration from a next time unit of a time unit corresponding to an end of the second duration to the time at which the first communication apparatus receives the retransmission scheduling control information corresponding to the acknowledgment information, or the third duration indicates a maximum duration from a next time unit of a time unit corresponding to an end of the second duration to a time at which the first communication apparatus receives a scheduling grant of the uplink/sidelink data.

The processing unit is configured to: when the third duration does not end in a next time unit of a time unit corresponding to an end of the first duration, skip monitoring, in a remaining time range of the third duration, the retransmission scheduling control information corresponding to the acknowledgment information.

It should be further understood that when the information transmission apparatus 1800 is the first communication apparatus, the transceiver unit 1820 in the information transmission apparatus 1800 may be implemented by using a communication interface (for example, a transceiver or an input/output interface), and the processing unit 1810 in the information transmission apparatus 1800 may be implemented by using at least one processor, for example, may correspond to the processor 1710 shown in FIG. 17.

Optionally, the information transmission apparatus 1800 may further include a storage unit. The storage unit may be configured to store instructions or data. The processing unit may invoke the instructions or the data stored in the storage unit, to implement a corresponding operation.

It should be understood that a specific process in which the units perform the foregoing corresponding steps has been described in detail in the foregoing method embodiments. For brevity, details are not described herein again.

In another possible design, the information transmission apparatus 1800 may be the second communication apparatus in the foregoing method embodiments, or may be a chip configured to implement functions of the second communication apparatus in the foregoing method embodiments.

In an example, the communication apparatus is configured to perform actions performed by the second communication apparatus in FIG. 9, and the transceiver unit 1810 is configured to perform step S910.

For example, the transceiver unit is configured to send first configuration information. The first configuration information includes a first duration, a second duration, and a first cycle. The first duration is less than the first cycle. The first duration starts at a start moment of the first cycle. The second duration indicates a minimum duration from a first moment at which the second communication apparatus receives acknowledgment information to a time at which the second communication apparatus sends retransmission scheduling control information corresponding to the acknowledgment information, or a minimum duration from a second moment at which the second communication apparatus receives uplink/sidelink data to a time at which the second communication apparatus sends retransmission scheduling control information corresponding to the uplink/sidelink data.

The transceiver unit is further configured to: when a time unit corresponding to an end of the first duration is not later than a time unit corresponding to an end of the second duration, and the acknowledgment information is a negative acknowledgment NACK, skip sending, in a next time unit of the time unit corresponding to the end of the second duration, the retransmission scheduling control information corresponding to the acknowledgment information.

In another example, the communication apparatus is configured to perform actions performed by the second communication apparatus in FIG. 13(a) and FIG. 13(b), and the transceiver unit 1820 is configured to perform step S 1310.

The transceiver unit is configured to send first configuration information. The first configuration information includes a first duration, a second duration, and a first cycle. The first duration is less than the first cycle. The first duration starts at a start moment of the first cycle. The second duration indicates a minimum duration from a first moment at which a first communication apparatus receives acknowledgment information to a time at which the first communication apparatus sends retransmission scheduling control information corresponding to the acknowledgment information, or a minimum duration from a second moment at which the second communication apparatus receives uplink/sidelink data to a time at which the second communication apparatus sends retransmission scheduling control information corresponding to the uplink/sidelink data. The first configuration information further includes a third duration. The third duration indicates a maximum duration from a next time unit of a time unit corresponding to an end of the second duration to the time at which the second communication apparatus sends the retransmission scheduling control information corresponding to the acknowledgment information, or the third duration indicates a maximum duration from a next time unit of a time unit corresponding to an end of the second duration to a time at which the second communication apparatus sends a scheduling grant of the uplink/sidelink data.

The transceiver unit is further configured to: when the third duration does not end in a next time unit of a time unit corresponding to an end of the first duration, skip sending, in a remaining time range of the third duration, the retransmission scheduling control information corresponding to the acknowledgment information.

It should be further understood that when the information transmission apparatus 1800 is the second communication apparatus, the transceiver unit 1820 in the information transmission apparatus 1800 may be implemented by using a communication interface (for example, a transceiver or an input/output interface), for example, may correspond to the communication interface 1860 shown in FIG. 17; and the processing unit 1810 in the information transmission apparatus 1800 may be implemented by using at least one processor, for example, may correspond to the processor 1710 shown in FIG. 17.

Optionally, the information transmission apparatus 1800 may further include a storage unit. The storage unit may be configured to store instructions or data. The processing unit may invoke the instructions or the data stored in the storage unit, to implement a corresponding operation.

It should be understood that a specific process in which the units perform the foregoing corresponding steps has been described in detail in the foregoing method embodiments. For brevity, details are not described herein again.

In addition, in this application, the information transmission apparatus 1800 is presented in a form of a functional module. The "module" herein may be an application-specific integrated circuit ASIC, a circuit, a processor that executes one or more software or firmware programs, a memory, an integrated logic circuit, and/or another component that can provide the foregoing functions. In a simple embodiment, a person skilled in the art may figure out that the apparatus 1800 may use a form shown in FIG. 18. The processing unit 1810 may be implemented by using the processor 1710 shown in FIG. 17. Optionally, if the computer device shown in FIG. 17 includes the memory 1760, the processing unit 1810 may be implemented by using the processor 1710 and the memory 1760. The transceiver unit 1820 may be implemented by using the transceiver 1560 shown in FIG. 17. The transceiver 1760 includes a receiving function and a sending function. Specifically, the processor executes a computer program stored in the memory to implement a function of the processing module. Optionally, when the apparatus 1800 is a chip, a function and/or an implementation process of the transceiver unit 1820 may be alternatively implemented by using a pin, a circuit, or the like. Optionally, the memory may be a storage unit in the chip, for example, a register or a cache. Alternatively, the storage unit may be a storage unit that is in the information transmission apparatus and that is located outside the chip, for example, the memory 1760 shown in FIG. 17; or may be a storage unit that is deployed in another system or device and that is not in the computer device.

Aspects or features of this application may be implemented as a method, an apparatus, or a product that uses standard programming and/or engineering technologies. For example, a computer-readable medium may include but is not limited to: a magnetic storage component (for example, a hard disk, a floppy disk, or a magnetic tape), an optical disc (for example, a compact disc (compact disc, CD), or a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may indicate one or more devices and/or other machine-readable media that are configured to store information. The term "machine-readable media" may include but is not limited to various other media that can store, contain, and/or carry instructions and/or data.

According to the method provided in embodiments of this application, this application further provides a computer program product. The computer program product includes computer program code or a group of instructions. When the computer program code or the group of instructions are run on a computer, the computer is enabled to perform the method according to any one of the embodiments shown in FIG. 9 to FIG. 16.

According to the method provided in embodiments of this application, this application further provides a computer-readable storage medium. The computer-readable storage medium stores a program or a group of instructions. When the program or the group of instructions are run on a computer, the computer is enabled to perform the method according to any one of the embodiments shown in FIG. 9 to FIG. 16.

According to the method provided in embodiments of this application, this application further provides a communication system, including the foregoing apparatus or device.

Terms such as "component", "module", and "system" used in this specification indicate computer-related entities, hardware, firmware, combinations of hardware and software, software, or software being executed. For example, a component may be, but is not limited to, a process that is run on a processor, a processor, an object, an executable file, an execution thread, a program, and/or a computer. As illustrated by using figures, both a computing device and an application that is run on the computing device may be components. One or more components may reside within a process and/or an execution thread, and a component may be located on one computer and/or distributed between two or more computers. In addition, these components may be executed by various computer-readable media that store various data structures. The components may communicate by using a local and/or remote process and based on, for example, a signal having one or more data packets (for example, data from two components interacting with another component in a local system, a distributed system, and/or across a network such as the Internet interacting with other systems by using the signal).

It should be further understood that the term "and/or" in this specification describes only an association relationship for describing associated objects and represents that three relationships may exist. For example, A and/or B may represent the following three cases: Only A exists, both A and B exist, and only B exists. In addition, a character "/" in this specification generally indicates an "or" relationship between contextually associated objects.

It should be further understood that numbers "first", "second", and the like are introduced in embodiments of this application only to distinguish between different objects, for example, distinguish between different "information", "devices", or "units". Understanding of a specific object and a correspondence between different objects should be determined based on functions and internal logic of the specific object, and should not constitute any limitation on an implementation process of embodiments of this application.

It may be clearly understood by a person skilled in the art that, for the purpose of convenient and brief description, for a specific working process of the foregoing system, apparatus, and unit, reference may be made to a corresponding process in the foregoing method embodiments. Details are not described herein again.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. An information transmission method, comprising:
receiving first configuration information, wherein the first configuration information comprises a first duration, a second duration, and a first cycle, the first duration is less than the first cycle, the first duration starts at a start moment of the first cycle, and the second duration indicates an estimated minimum duration from a first moment at which a first communication apparatus reports acknowledgment information to a time at which the first communication apparatus receives retransmission scheduling control information corresponding to the acknowledgment information, or the second duration indicates an estimated minimum duration from a second moment at which a first communication apparatus transmits uplink/sidelink data to a time at which the first communication apparatus receives retransmission scheduling control information corresponding to the uplink/sidelink data; and
when a time unit corresponding to an end of the first duration is not later than a time unit corresponding to an end of the second duration, and the acknowledgment information is a negative acknowledgment NACK, skipping monitoring, in a next time unit of the time unit corresponding to the end of the second duration, the retransmission scheduling control information corresponding to the acknowledgment information.

2. The method according to claim 1, wherein the method further comprises:
monitoring, in K consecutive time units that are before a time unit corresponding to an end of the first cycle and that are adjacent to the time unit corresponding to the end of the first cycle, the retransmission scheduling control information corresponding to the acknowledgment information.

3. The method according to claim 2, wherein when the time unit corresponding to the end of the first duration is not later than the time unit corresponding to the end of the second duration, and the acknowledgment information is the NACK, the method further comprises:
prolonging the second duration from an end location in the first cycle to a start moment of the K consecutive time units before and adjacent to the time unit corresponding to the end of the first cycle.

4. The method according to any one of claims 1 to 3, wherein the first configuration information is further used to configure a third duration, and the third duration indicates a maximum duration from a next time unit of the time unit corresponding to the end of the second duration to the time at which the first communication apparatus receives the retransmission scheduling control information corresponding to the acknowledgment information; or
the third duration indicates a maximum duration from a next time unit of the time unit corresponding to the end of the second duration to a time at which the first communication apparatus receives a scheduling grant of the uplink/sidelink data.

5. The method according to claims 1 to 4, wherein the K consecutive time units are determined based on a quantity of HARQ processes whose acknowledgment information is a NACK and for which the time unit corresponding to the end of the first duration is not later than the time unit corresponding to the end of the second duration; and/or
determined based on a decoding capability of the first communication apparatus; and/or
determined based on the third duration; and/or
configured by using the first configuration information.

6. An information transmission method, comprising:
receiving first configuration information, wherein the first configuration information comprises a first duration, a second duration, and a first cycle, the first duration is less than the first cycle, the first duration starts at a start moment of the first cycle, and the second duration indicates an estimated minimum duration from a first moment at which a first communication apparatus reports acknowledgment information to a time at which the first communication apparatus receives retransmission scheduling control information corresponding to the acknowledgment information, or the second duration indicates an estimated minimum duration from a second moment at which a first communication apparatus transmits uplink/sidelink data to a time at which the first communication apparatus receives retransmission scheduling control information corresponding to the uplink/sidelink data;
the first configuration information further comprises a third duration, and the third duration indicates a maximum duration from a next time unit of a time unit corresponding to an end of the second duration to the time at which the first communication apparatus receives the retransmission scheduling control information corresponding to the acknowledgment information, or the third duration indicates a maximum duration from a next time unit of a time unit corresponding to an end of the second duration to a time at which the first communication apparatus receives a scheduling grant of the uplink/sidelink data; and
when the third duration does not end in a next time unit of a time unit corresponding to an end of the first duration, skipping monitoring, in a remaining time range of the third duration, the retransmission scheduling control information corresponding to the acknowledgment information.

7. The method according to claim 6, wherein the method further comprises:
monitoring, in K consecutive time units that are before a time unit corresponding to an end of the first cycle and that are adjacent to the time unit corresponding to the end of the first cycle, the retransmission scheduling control information corresponding to the acknowledgment information.

8. The method according to claim 7, wherein the K consecutive time units are determined based on a quantity of HARQ processes for which the third duration does not end in the next time unit of the time unit corresponding to the end of the first duration; and/or
determined based on a decoding capability of the first communication apparatus; and/or
determined based on the third duration; and/or
configured by using the first configuration information.

9. The method according to any one of claims 1 to 8, wherein the first cycle is a discontinuous reception DRX long cycle; or
the first cycle is a DRX short cycle; or
the first cycle is a semi-persistent transmission cycle; or
the first cycle is a transmission cycle of a service.

10. The method according to any one of claims 1 to 9, wherein the acknowledgment information is acknowledgment information of a hybrid automatic repeat request HARQ process.

11. The method according to any one of claims 1 to 10, wherein the first configuration information is further used to indicate a fourth duration, the fourth duration indicates a duration for which the first communication apparatus monitors control information, and the method further comprises:
determining a fifth duration, wherein the first communication apparatus monitors the control information in the fifth duration, and a start location of the fifth duration in the first cycle is determined through shifting a start location of the fourth duration forward by the K consecutive time units.

12. The method according to claim 11, wherein a next time unit of a time unit corresponding to an end of the fifth duration in the first cycle is a time unit corresponding to a start of the fourth duration in a next adjacent first cycle; or
a time unit corresponding to an end of the fifth duration in the first cycle is a time unit corresponding to an end of the fourth duration in a next adjacent first cycle.

13. The method according to claim 11 or 12, wherein the fifth duration is valid only in the first cycle.

14. An information transmission method, comprising:
sending first configuration information, wherein the first configuration information comprises a first duration, a second duration, and a first cycle, the first duration is less than the first cycle, the first duration starts at a start moment of the first cycle, and the second duration indicates a minimum duration from a first moment at which a second communication apparatus receives acknowledgment information to a time at which the second communication apparatus sends retransmission scheduling control information corresponding to the acknowledgment information, or the second duration indicates a minimum duration from a second moment at which a second communication apparatus receives uplink/sidelink data to a time at which the second communication apparatus sends retransmission scheduling control information corresponding to the uplink/sidelink data; and
when a time unit corresponding to an end of the first duration is not later than a time unit corresponding to an end of the second duration, and the acknowledgment information is a negative acknowledgment NACK, skipping sending, in a next time unit of the time unit corresponding to the end of the second duration, the retransmission scheduling control information corresponding to the acknowledgment information.

15. The method according to claim 14, wherein the method further comprises:
sending, in K consecutive time units that are before a time unit corresponding to an end of the first cycle and that are adjacent to the time unit corresponding to the end of the first cycle, the retransmission scheduling control information corresponding to the acknowledgment information.

16. The method according to claim 14 or 15, wherein the first configuration information is further used to configure a third duration, and the third duration indicates a maximum duration from a next time unit of the time unit corresponding to the end of the second duration to the time at which the second communication apparatus sends the retransmission scheduling control information corresponding to the acknowledgment information; or
the third duration indicates a maximum duration from a next time unit of the time unit corresponding to the end of the second duration to a time at which the second communication apparatus sends a scheduling grant of the uplink/sidelink data.

17. The method according to claims 14 to 16, wherein the K consecutive time units are determined based on a quantity of HARQ processes whose acknowledgment information is a NACK and for which the time unit corresponding to the end of the first duration is not later than the time unit corresponding to the end of the second duration; and/or
determined based on a decoding capability of the first communication apparatus; and/or
determined based on the third duration; and/or
configured by using the first configuration information.

18. An information transmission method, comprising:
sending first configuration information, wherein the first configuration information comprises a first duration, a second duration, and a first cycle, the first duration is less than the first cycle, the first duration starts at a start moment of the first cycle, and the second duration indicates a minimum duration from a first moment at which a first communication apparatus receives acknowledgment information to a time at which the first communication apparatus sends retransmission scheduling control information corresponding to the acknowledgment information, or the second duration indicates a minimum duration from a second moment at which the second communication apparatus receives uplink/sidelink data to a time at which the second communication apparatus sends retransmission scheduling control information corresponding to the uplink/sidelink data;
the first configuration information further comprises a third duration, and the third duration indicates a maximum duration from a next time unit of a time unit corresponding to an end of the second duration to the time at which the second communication apparatus sends the retransmission scheduling control information corresponding to the acknowledgment information, or the third duration indicates a maximum duration from a next time unit of a time unit corresponding to an end of the second duration to a time at which the second communication apparatus sends a scheduling grant of the uplink/sidelink data; and
when the third duration does not end in a next time unit of a time unit corresponding to an end of the first duration, skipping sending, in a remaining time range of the third duration, the retransmission scheduling control information corresponding to the acknowledgment information.

19. The method according to claim 18, wherein the method further comprises:
sending, in K consecutive time units that are before a time unit corresponding to an end of the first cycle and that are adjacent to the time unit corresponding to the end of the first cycle, the retransmission scheduling control information corresponding to the acknowledgment information.

20. The method according to claim 7, wherein the K consecutive time units are determined based on a quantity of HARQ processes for which the third duration does not end in the next time unit of the time unit corresponding to the end of the first duration; and/or
determined based on a decoding capability of the first communication apparatus; and/or
determined based on the third duration; and/or
configured by using the first configuration information.

21. The method according to any one of claims 14 to 20, wherein the first cycle is a discontinuous reception DRX long cycle; or
the first cycle is a DRX short cycle; or
the first cycle is a semi-persistent transmission cycle; or
the first cycle is a transmission cycle of a service.

22. The method according to any one of claims 14 to 21, wherein the acknowledgment information is acknowledgment information of a hybrid automatic repeat request HARQ process.

23. The method according to any one of claims 14 to 22, wherein the first configuration information is further used to indicate a fourth duration, the second communication apparatus sends scheduling control information of data in the fourth duration, and the method further comprises:
determining a fifth duration, wherein the second communication apparatus sends the scheduling control information of the data in the fifth duration, and a start location of the fifth duration in the first cycle is determined through shifting a start location of the fourth duration forward by the K consecutive time units.

24. The method according to claim 23, wherein a next time unit of a time unit corresponding to an end of the fifth duration in the first cycle is a time unit corresponding to a start of the fourth duration in a next adjacent first cycle; or
a time unit corresponding to an end of the fifth duration in the first cycle is a time unit corresponding to an end of the fourth duration in a next adjacent first cycle.

25. The method according to claim 23 or 24, wherein the fifth duration is valid only in the first cycle.

26. A communication apparatus, comprising:
a memory, configured to store computer instructions; and
a processor, configured to execute the computer instructions stored in memory, so that the communication apparatus performs the method according to any one of claims 1 to 13.

27. A communication apparatus, comprising:
a memory, configured to store computer instructions; and
a processor, configured to execute the computer instructions stored in memory, so that the communication apparatus performs the method according to any one of claims 14 to 25.

28. A computer-readable storage medium, wherein the computer-readable storage medium stores a computer program, and when the computer program is executed by a communication apparatus, the method is performed according to any one of claims 1 to 25.

29. A computer program product comprising instructions, wherein when the computer program product is run on a computer, the method according to any one of claims 1 to 25 is performed.

30. A chip system, comprising a processor, configured to: invoke a computer program or instructions from a memory and run the computer program or the instructions, so that a communication apparatus on which the chip system is installed implements the method according to any one of claims 1 to 25.
